# EUROPEAN PATENT APPLICATION

(11) **EP 1 577 351 A1**
(43) Date of publication of application: **21.09.2005**
(21) Application number: 04101136.2
(22) Date of filing: 19.03.2004
(51) Int. Cl.: C09C 1/30, B41M 5/00

(54) **Improved ink-jet recording material**

(71) Applicant: AGFA-GEVAERT, 2640 Mortsel (BE)
(72) Inventor: Van Aert, Hubertus, 2640, Mortsel (BE); Lingier, Stefaan, 2640, Mortsel (BE); Ducroquetz, Celine, 2640, Mortsel (BE)

(57) **Abstract**

An ink-jet recording material having a support and at least one ink-receiving layer, the ink-receiving layer comprising at least one binder and a cationized fumed silica prepared by copolymerizing at least one cationic monomer and at least one non-cationic monomer monomer in the presence of a fumed silica. A cationized fumed silica prepared by polymerizing the monomers in the presence of a fumed silica and a method of preparing an ink-jet recording material are also disclosed.

## Description

### Technical field

The present invention relates to an ink-jet recording material, more specifically to an ink-jet recording material having a microporous ink-receiving layer.

### Background art

It is known that the ink-receiving layers in ink-jet recording elements must meet different stringent requirements:
- the ink-receiving layer should have a high ink absorbing capacity, so that the dots will not flow out and will not increase in size more than is necessary to obtain a high optical density;
- the ink-receiving layer should have a high ink absorbing speed (short ink drying time) so that the ink-droplets will not feather if touched immediately after application;
- the ink dots that are applied to the ink-receiving layer should be substantially round in shape and smooth at their peripheries. The dot diameter must be constant and accurately controlled;
- the receiving layer must be readily wetted so that there is no "puddling", i.e. coalescence of adjacent ink dots, and an earlier absorbed ink drop should not show any "bleeding", i.e. overlap with neighbouring or later placed dots;
- transparent ink-jet recording elements must have a low haze-value and exhibit excellent transmittance properties;
- after being printed the image must have a good resistance regarding water-fastness, light-fastness, and be stable to extreme conditions of temperature and humidity;
- the ink-jet recording material may not show any curl or sticky behaviour if stacked before or after being printed;
- the ink-jet recording element must be able to move smoothly through different types of printers;

All these properties are often in a trade-off relationship with one another, as it is difficult to satisfy them all at the same time.

Ink-receiving layers for ink-jet recording media are either non-absorptive or absorptive. In absorptive ink-receiving layers the ink is either absorbed by the swelling of the layer due to the specific polymers present in the layer, or is absorbed by capillarity, due to the microporous character of the layer.

The porosity of these microporous layers is mainly achieved by incorporating fillers such as alumina, alumina hydrates and silica into the ink-receiving layer. Filler particles with diameters less than 0.1 µm are necessary to obtain transparent layers. Moreover, in order to achieve a sufficient porosity with such small particles, the filler/binder ratio has to be high with weight ratios of at least 4:1 being preferred.

In order to obtain printed images with high colour densities, high sharpness and without spreading, feathering and inter-colour bleeding, the dyes must be physically or chemically fixed. For physical fixing, the layer must have a surface charge opposite to that of the dye in the ink. Since most dyes in aqueous dye based inks contain acidic functional groups e.g. sulphonic or carboxylic groups to improve the solubility in water, this means that the surface must have a positive charge. This fixing can be achieved by the use of cationic polymers or mordants. In the absence of cationic polymers or mordants, microporous ink-receiving layers only ensure sufficient fixing of the dyes if the filler particles are positively charged.

The most widely used fillers with a positive surface charge and particle sizes of less than 0.5µm, are Al-containing oxides or hydroxides (Alumina (Al₂O₃), alumina hydrates (AIO(OH)). However, these fillers are much more expensive than other inorganic fillers such as silica.

Fumed silica has small particles with a very large surface area and a chain-like particle morphology. Typically the surface area is larger than 200m²/g. Chemically, the fumed silica consists of amorphous silicon dioxide and is produced by the introduction of volatile chlorosilanes into an oxyhydrogen flame. First the volatile chlorosilanes react to yield primary particles of silica and hydrochloric acid. The HCl is easily separated as it remains in the gas phase. The size of these SiO₂ primary particles is of the order of about 10nm. The surface of these particles is smooth and not microporous. In the flame, these primary particles fuse into larger units or secondary particles, known as aggregates. These aggregates exhibit a chain-like particle morphology. The typical size of an aggregate is between 100 to 500nm.On cooling, the aggregates flocculate to form agglomerates. Fumed silica has the advantages of a low cost price and a very high porosity, but exhibits a negatively charged surface at the pH (between 4 and 10) generally used for coating an ink-receiving layer. A fumed silica with a negatively charged surface in combination with hydrophilic binders such as polyvinyl alcohol leads to flocculation and severe cracking of the coated layers. In order to formulate fumed silicas with water soluble polymers like polyvinylalcohol and avoid flocculation, the fumed silica is preferably cationized, e.g. by addition of cationic polymers.

**EP 850777** A (OJI PAPER CO.) discloses a method of preparing a cationized silica dispersion by mixing a cationic resin into an aqueous silica dispersion. However, the resulting dispersions exhibit a high viscosity, which is undesirable for coating purposes.

To avoid these high viscosities upon cationizing the silica by addition of a cationic polymer, in **US 6,403,162** (MITSUBISHI PAPER MILLS) and **US 6,165,606** (KONICA) disclose the use of low molecular weight cationic polymers are used. Cationic polymers are claimed having an average molecular weight lower than 100.000 in **US 6,403,162** (MITSUBISHI PAPER MILLS) or even lower than 50.000 in **US 6,165,606** (KONICA) . However, the reduction of the average molecular weight of the cationic polymer enhances the mobility of the cationic polymer, causing new problems. The stability of the coating solutions decreases, as the higher mobility of the cationic polymer is translated into a lower interaction between the negatively charged silica and the cationic polymer. Furthermore, problems of "bleeding" are also observed in the printed image. Bleeding occurs when a later placed ink-droplet on a ink-receiving layer mixes with or "bleeds into" a neighbouring or earlier placed ink-droplet.

**EP 1306395** A (FUJI PHOTO FILM CO.) discloses a cationic polymer-modified inorganic pigment particle. The polymer has reactive endgroups, which can be coupled to the surface of the silica. For this purpose mercaptopropyl-trimethoxysilane is used as a chain transfer agent in the polymerisation of the cationic polymer. For unknown reasons however, the coating solutions also exhibit high viscosities, and therefore polymers with a very low molecular weight of 1000 -20000 g/mol have to be used. Although the bleeding-property is improved by reducing the mobility of the cationic polymer, the stability is further decreased, since by introducing a very low molecular weight cationic polymer bridging flocculation occurs more readily. Moreover, one skilled in the art knows that the polymer synthesis is rendered more difficult when low molecular weight polymers with narrow distribution are requested.

**US 2003/0137571** (AGFA) and in **US 2003/0180479** (AGFA) disclose the possibility of the polymerisation of a cationic or amino functional monomer in the presence of silica.

**JP 2001293948** (OJI PAPER CO.) discloses an ink-jet recording medium comprising an ink-receiving layer containing a cationized silica obtained by polymerizing a quaternary ammonium compound having an ethylenic unsaturated group in a silica sol. A silica sol consists of spherically shaped silica particles. In an ink-jet recording material, these spherically shaped silica particles are closely packed and hence are not capable of creating the very high porosity, which can be obtained with fumed silica.

It is, therefore, desirable to find a way of using fumed silica and easily synthesized cationic polymers with a higher molecular weight in a coating dispersion with polyvinylalcohol which exhibits a low viscosity, a high stability and no adverse effects on the image quality of the resulting ink-jet recording material such as bleeding.

### Disclosure of the Invention

### OBJECTS OF THE INVENTION

It is an object of the present invention to provide an ink-jet recording material capable of providing an image exhibiting a high image quality with high gloss, high colour densities, no bleeding and a fast drying time.

It is a further object of the present invention to provide a coating dispersion for the ink-jet recording material, with high stability and low viscosity for manufacturing the ink-jet recording material.

It is also an object of the present invention to provide a cationized fumed silica for use in the coating dispersion for the ink-jet recording material.

It is still another object of the present invention to provide a method for the synthesis of cationized fumed silica.

Further objects and advantages of the invention will become apparent from the description hereinafter.

### SUMMARY OF THE INVENTION

It would seem obvious to apply the teaching of **JP 2001-293948** (OJI PAPER CO.) to fumed silica. However, it was found that it was impossible upon combining the cationized fumed silica with polyvinylalcohol, the preferred binder for an ink-jet recording material, to prepare a coating dispersion without flocculation.

However, it has been surprisingly found that by copolymerizing a quaternary ammonium compound having an ethylenic unsaturated group with a non-cationic ethylenically unsaturated monomer in the presence of fumed silica a cationized fumed silica was obtained which upon adding polyvinyl alcohol did not flocculate. Furthermore, ink-receiving layers coated therewith upon jetting with one of more ink-jet inks provided an image exhibiting a high image quality with high gloss, high colour densities, no bleeding and a fast drying time.

It is believed that the reactive monomers and the interacting monomers prevent desorption of the polymer from the surface of the fumed silica. As a consequence, a dispersion of polyvinylalcohol and the cationized fumed silica of the present invention will tend to have less bridging flocculation. Bridging flocculation involves polymer chains sticking to multiple particles, making an aggregate large enough to settle out. Another surprising advantage of the cationic polymer covalently bond or well-adsorbed to the surface of the fumed silica, is that the coating dispersion has a low viscosity.

Objects of the present invention have been realized by a process for preparing cationized fumed silica comprising the step of:
(i) copolymerizing a monomer mixture containing a cationic monomer and at least one non-cationic monomer in the presence of a fumed silica in a liquid medium to produce a dispersion of the in-situ cationized fumed silica.

Objects of the present invention have further been realized by cationized fumed silica obtainable by the above-described process.

Objects of the present invention have also been realized by an ink-jet recording material comprising a support and at least one ink-receiving layer, said ink-receiving layer containing a binder and a cationized fumed silica obtainable by the above-described process.

Objects of the present invention have also been realized by a process for preparing an ink-jet recording material comprising the steps of: (i) coating a dispersion containing a cationized fumed silica dispersion obtainable by the above-described process onto said support.

Further objects of the present invention are disclosed in the dependent claims.

### DETAILED DESCRIPTION OF THE INVENTION

### Definitions

The term "cationic monomer" as used in disclosing the present invention means a monomer that has a positive charge. It also includes a monomer that becomes cationic at a pH < 7.

The term "reactive monomer" as used in disclosing the present invention means a monomer capable of forming a covalent bond with the surface of a fumed silica.

The term "interacting monomer" as used in disclosing the present invention means a monomer capable of forming a non-covalent bond with the surface of a fumed silica, e.g. a hydrogen bond.

The term "pigment" is defined in DIN 55943, herein incorporated by reference, as an inorganic or organic, chromatic or achromatic colouring agent that is practically insoluble in the application medium under the pertaining ambient conditions, hence having a solubility of less than 10 mg/L therein.

The term "filler", as used in the present invention, means an inorganic or organic material added to an ink-recording material to modify its properties, e.g. adhesion of a subbing layer to a polyester film, opacity of an ink-recording material and tribo-electrical properties.

The term "alkyl"means all variants possible for each number of carbon atoms in the alkyl group i.e. for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl etc.

The term "acyl group" as used in disclosing the present invention means - (C=O)-aryl and -(C=O)-alkyl groups.

The term "saturated aliphatic group" as used in disclosing the present invention means saturated straight chain, branched chain and alicyclic hydrocarbon groups.

The term "unsaturated aliphatic group" as used in disclosing the present invention means straight chain, branched chain and alicyclic hydrocarbon groups which contain at least one double or triple bond.

The term "aromatic group" as used in disclosing the present invention means an assemblage of cyclic conjugated carbon atoms, which are characterized by large resonance energies, e.g. benzene, naphtalene and anthracene.

The term "alicyclic hydrocarbon group" means an assemblage of cyclic conjugated carbon atoms, which do not form an aromatic group, e.g. cyclohexane.

The term "substituted" as used in disclosing this invention means that one or more of the carbon atoms and/or that a hydrogen atom of one or more of carbon atoms in an aliphatic group, an aromatic group or an alicyclic hydrocarbon group, are replaced by an oxygen atom, a nitrogen atom, a sulfur atom,a selenium atom or a tellurium atom, or a group containing one or more of these said carbon and hydrogen replacing atoms. Such substituents include hydroxyl groups, ether groups, carboxylic acid groups, ester groups, amide groups and amine groups.

The term "heteroaromatic group" means an aromatic group wherein at least one of the cyclic conjugated carbon atoms is replaced by an oxygen atom, a nitrogen atom, a sulfur atom, a selenium atom or a tellurium atom.

The term "heterocyclic group" means an alicyclic hydrocarbon group wherein at least one of the cyclic conjugated carbon atoms is replaced by an oxygen atom, a nitrogen atom, a sulfur atom, a selenium atom or a tellurium atom.

The term in-situ means 'in the presence of'. Therefore, in-situ polymerized means 'polymerized in the presence of'.

### Cationized fumed silica

Objects of the present invention have been realized by a process for preparing cationized fumed silica comprising the step of:
(i) copolymerizing a monomer mixture containing at least one cationic monomer and at least one non-cationic monomer in the presence of a fumed silica in a liquid medium to produce a dispersion of the in-situ cationized fumed silica; and by cationized fumed silica obtainable by said process.

Suitables types of fumed silica for use in the ink-jet recording material according to the present invention include WACKER HDK® grades such as WACKER HDK®T30 and WACKER HDKT40 available from WACKER, CAB-O-SIL® M5 and CAB-O-SIL® H5 available from CABOT CORPORATION, AEROSIL 200® and AEROSIL 380® available form DEGUSSA AG.

The fumed silica may contain minor amounts of metal oxides with a metal selected from the group of Al, Zr and Ti.

The polymerization reaction is not restricted to a specific type of reaction, e.g. a radical polymerization, condensation polymerisation, cationic polymerisation, anionic polymerisation, ringopening polymerisation, etc.

The polymerization method used in this invention is preferably a batch or a semi-continuous free-radical polymerization. In one embodiment of a batch polymerization, a mixture of monomers is added to a jacketed reactor with nitrogen flow and stirred. The reactor is heated to the desired temperature and under stirring a solution containing fumed silica is added to the reactor. Subsequently the polymerization reaction is initiated by the addition of a solution containing a polymerization initiator. The reaction is allowed to continue for a certain amount of time.

In a more preferred embodiment of a batch polymerization, a solution containing fumed silica is added to a jacketed reactor with nitrogen flow and stirred. The reactor is heated to the desired temperature and under stirring a mixture of monomers is added to the reactor. Subsequently the polymerization reaction is initiated by the addition of a solution containing a polymerization initiator. The reaction is allowed to continue for a certain amount of time.

In one embodiment of a semi-continuous polymerization, a solution containing fumed silica is added to a jacketed reactor with nitrogen flow and stirred. Subsequently, a part of a mixture of monomers is added to the reactor and mixed with the fumed silica. The reactor is heated to the desired temperature. Then, simultaneously the rest of the mixture of monomers and a solution containing a polymerization initiator is added at a certain flow rate. The polymerization initiator starts the reaction. The reaction is allowed to continue for a certain amount of time after the addition of the mixture of monomers.

In a more preferred embodiment of a semi-continuous polymerization, part of a mixture of monomers is added to a jacketed reactor with nitrogen flow and stirred. Subsequently, a solution containing fumed silica is added to the reactor and mixed with the monomers. The reactor is heated to the desired temperature. Then, simultaneously the rest of the mixture of monomers and a solution containing a polymerization initiator is added at a certain flow rate. The polymerization initiator starts the reaction. The reaction is allowed to continue for a certain amount of time after the addition of the mixture of monomers.

In another prefered embodiment the monomers and fumed silica are both added semi-continuously to the reactor containing water or a solution comprising a fumed silica and/or monomers.

A prefered polymerization initiator for use in the present invention is 2,2'-Azobis(2-amidinopropane)dihydrochloride. This polymerization initiator is available as WAKO V50® available from WAKO CHEMICALS.

Other suitable initiators include: other water soluble azo initators such as 2,2'-Azobis(N,N'-dimethyleneisobutyramidine) (WAKO VA061® available from WAKO CHEMICALS), 4,4'-Azobis (4-cyanopentanoic acid) (WAKO V501® available from WAKO CHEMICALS), persulfate intiators such as ammonium persulfate, sodium persulfate or potassium persulfate available from ALDRICH, and peroxides such as hydrogen peroxide (available form ALDRICH) and tert.-butylhydroperoxide (Trigonox A-W70® available from AKZO).

Furthermore redox intiators can be used such as tert.butyl hydroperoxyde/sodium formaldehyde sulfoxylate and hydrogen peroxyde/ascorbic acid.

The mixture of monomers used in the process for preparing cationized fumed silica, according to the present invention, contains at least one cationic monomer and at least one non-cationic monomer. The non-cationic monomer can be a reactive monomer or an interacting monomer.

In the mixture of monomers one or more types of cationic monomers can be used in combination with one or more types of non-cationic monomers. In the case that several types of non-cationic monomers are used, it can be a mixture of a reactive monomer and different types of interacting monomers, a interacting monomer and different types of reactive monomers or different types of reactive monomers and different types of interacting monomers.

### Cationic monomers

The cationic monomers for use in the process for preparing cationized fumed silica, according to the present invention, are preferably selected from the group consisting of ammonium monomers, phosphonium monomers, sulfonium monomers, amphoteric monomers and amino containing monomers.

Suitable examples of ammonium monomers include:

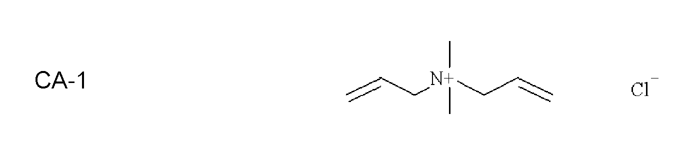

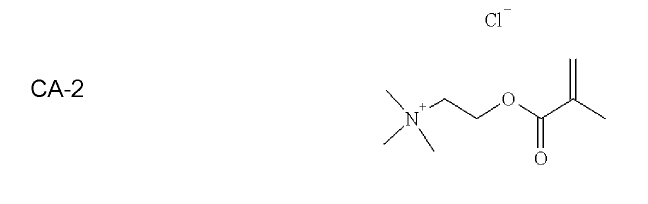

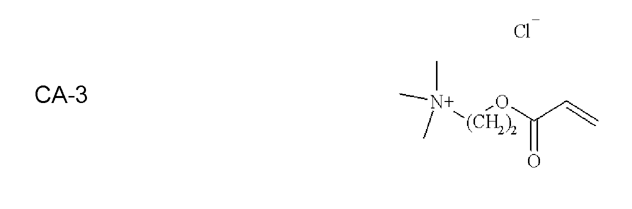

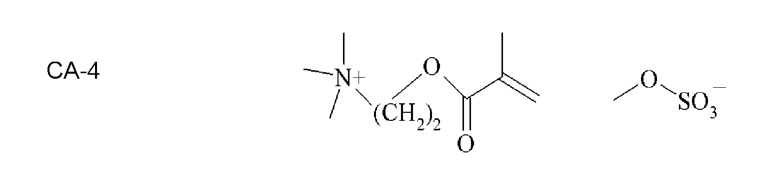

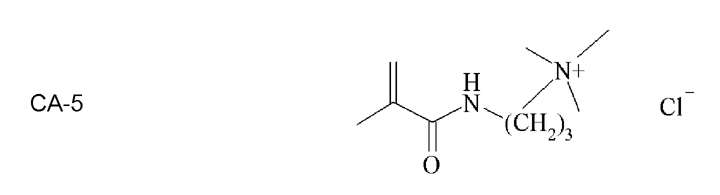

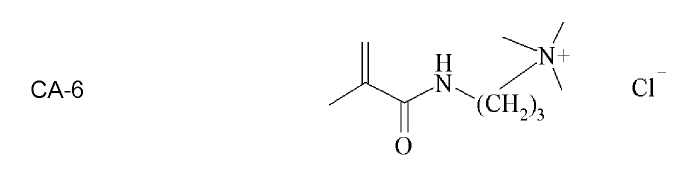

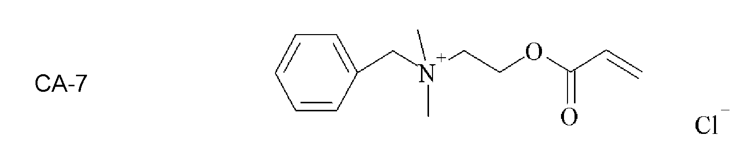

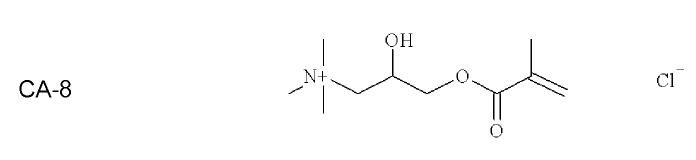

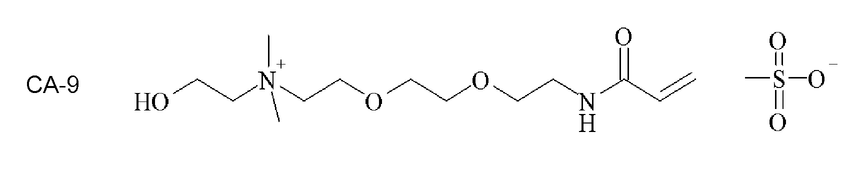

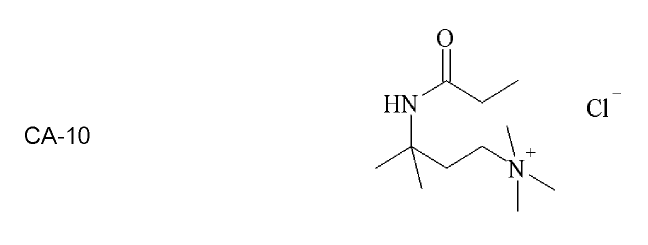

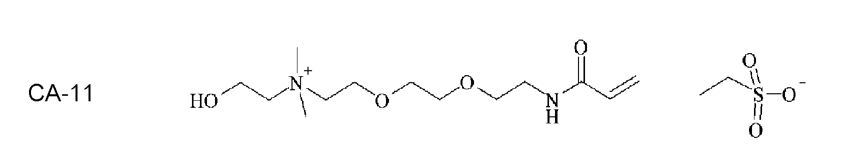

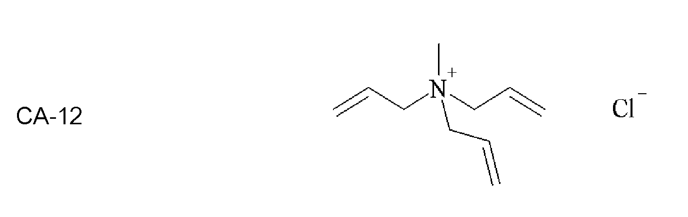

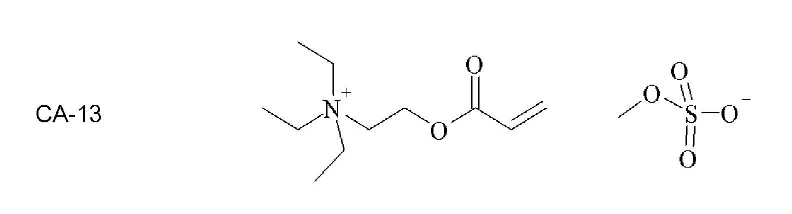

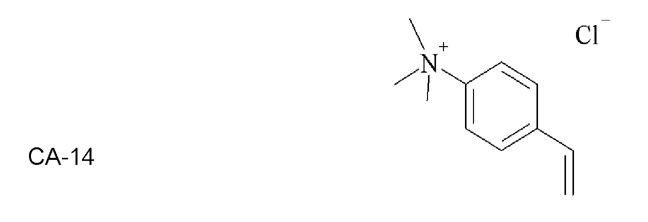

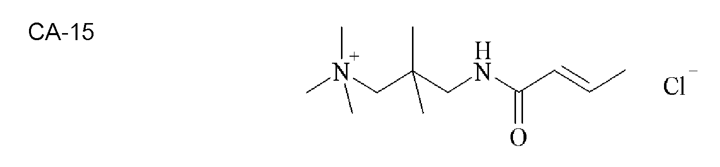

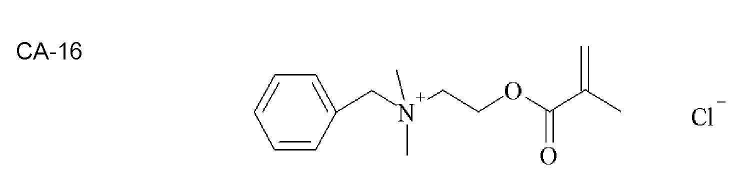

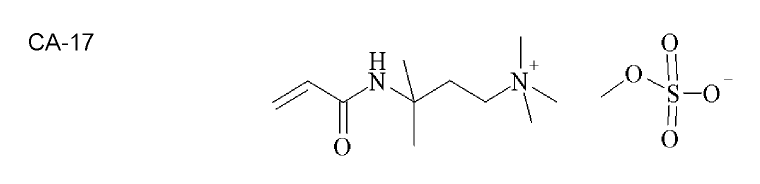

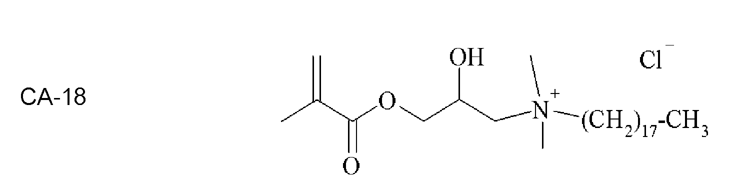

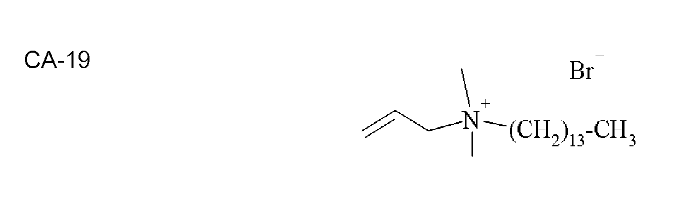

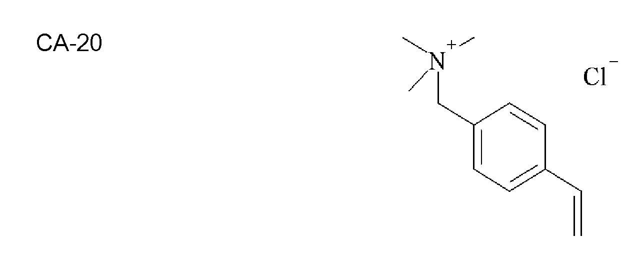

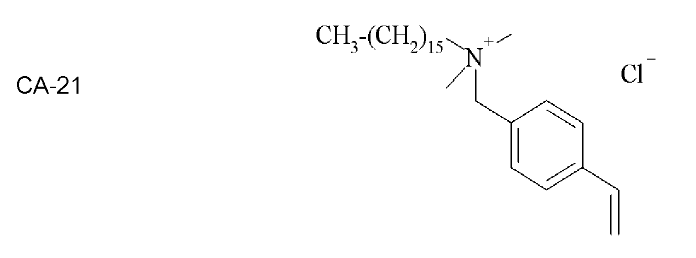

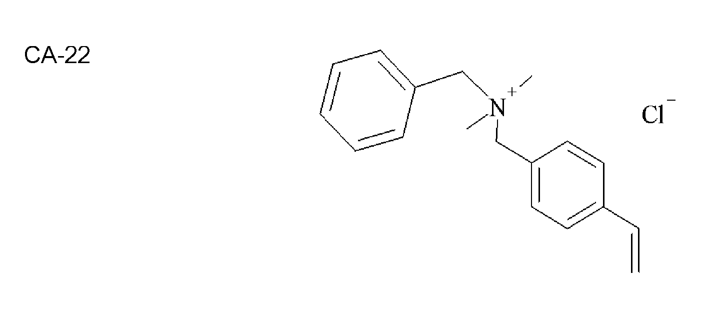

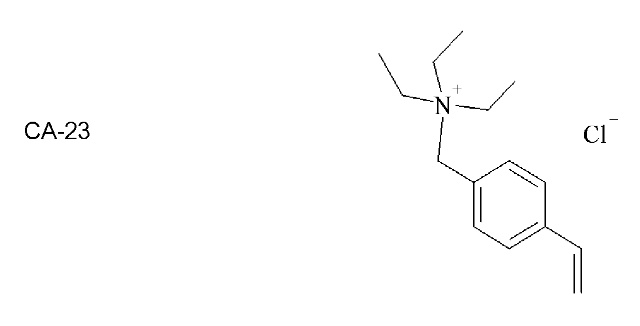

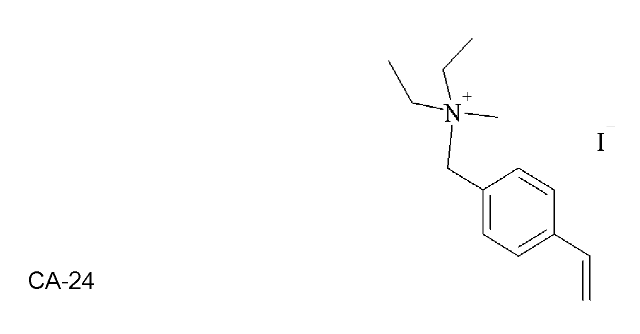

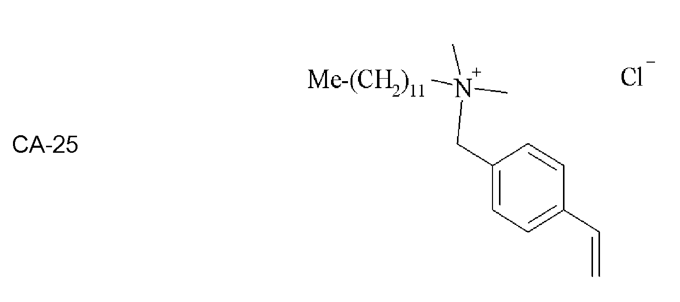

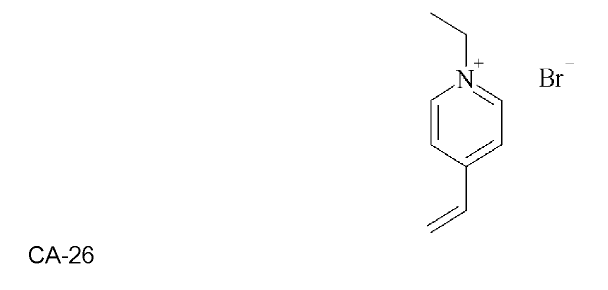

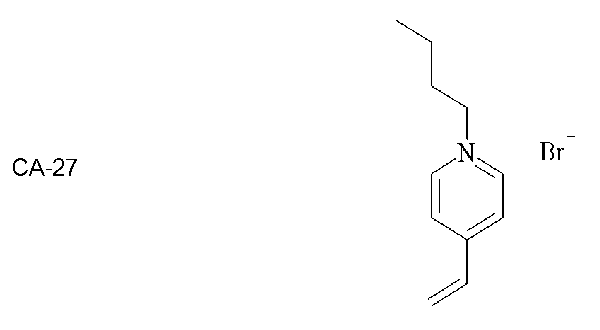

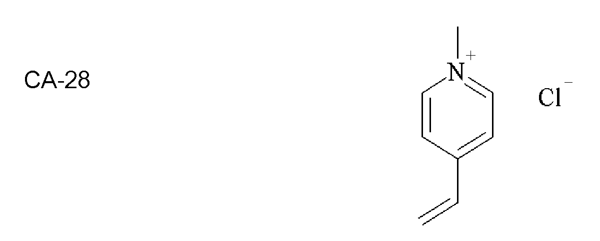

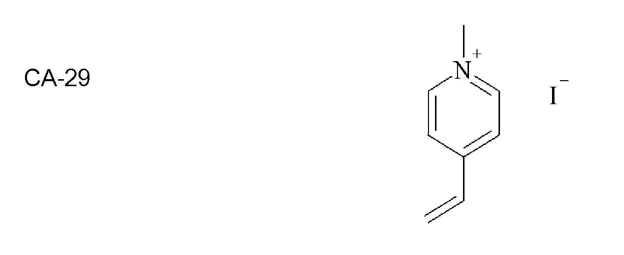

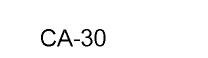

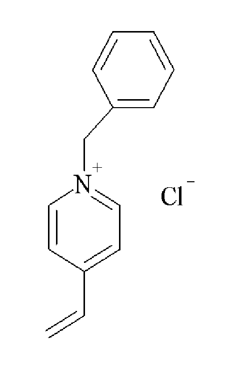

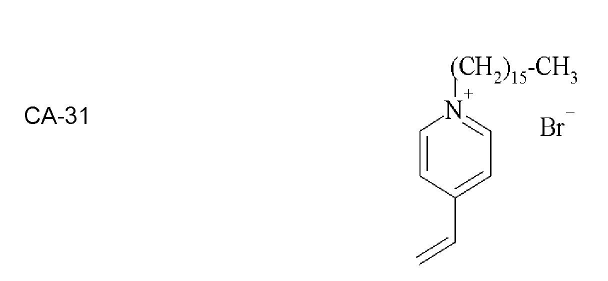

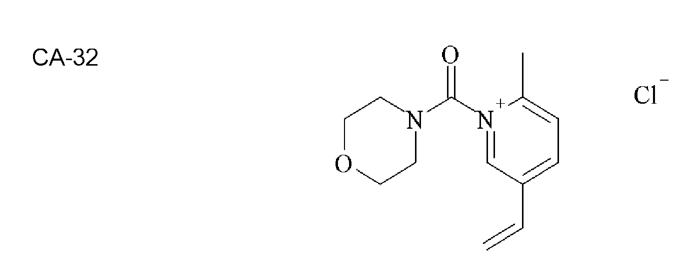

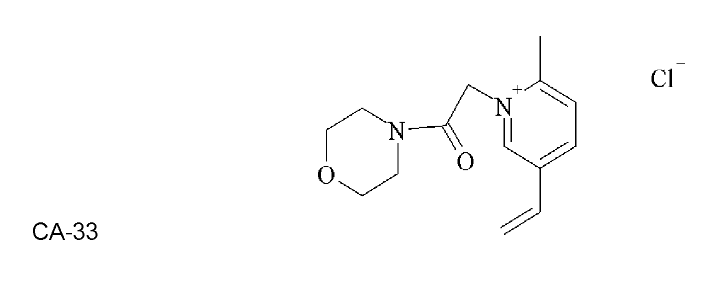

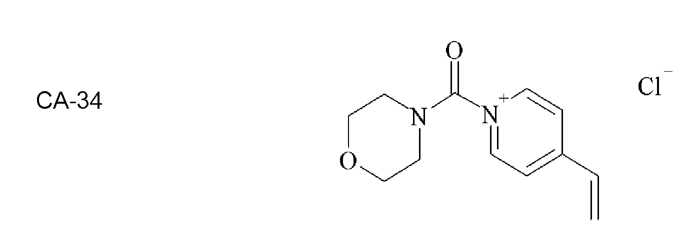

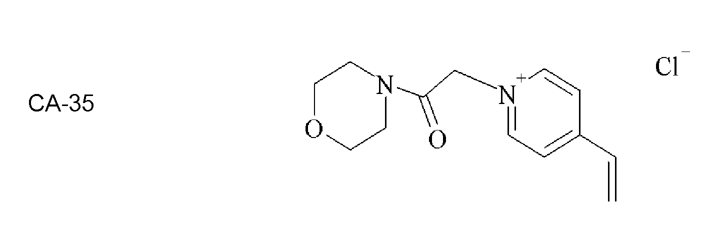

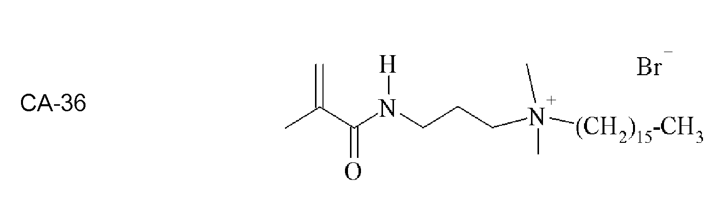

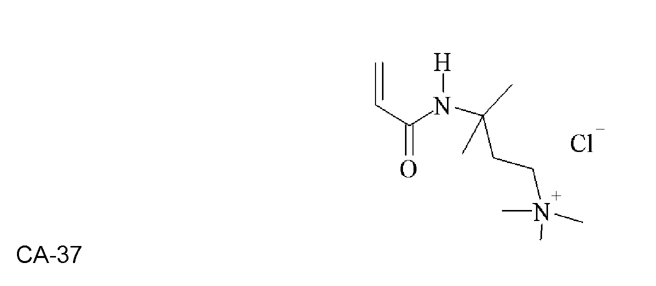

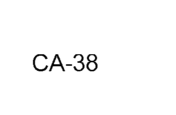

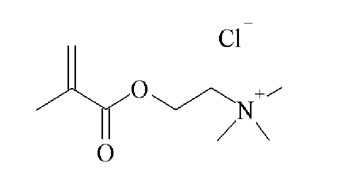

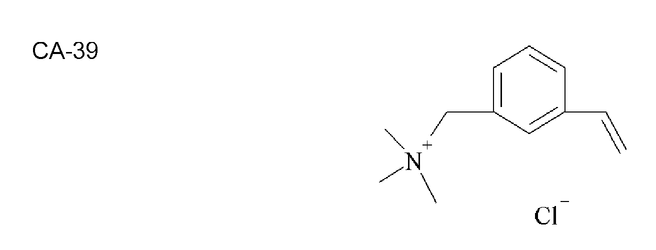

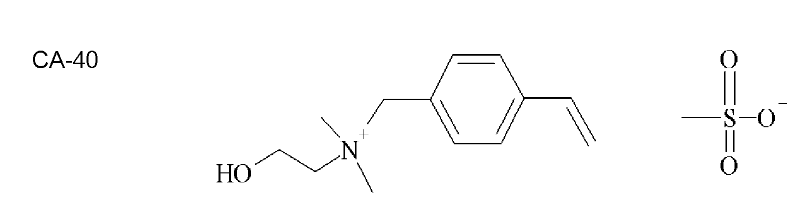

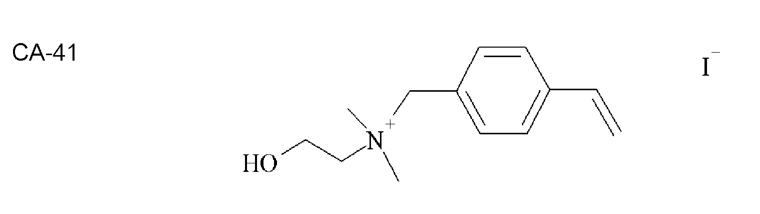

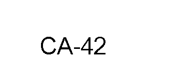

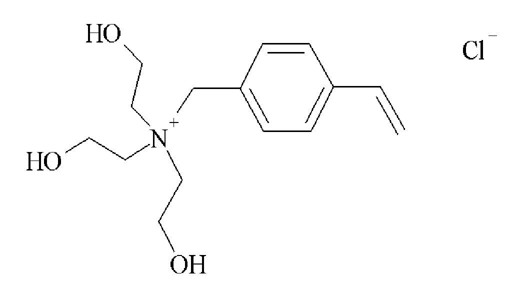

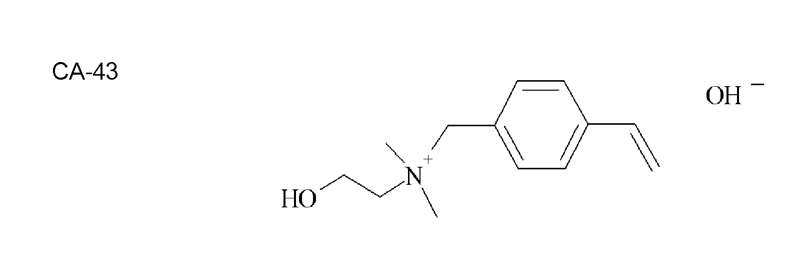

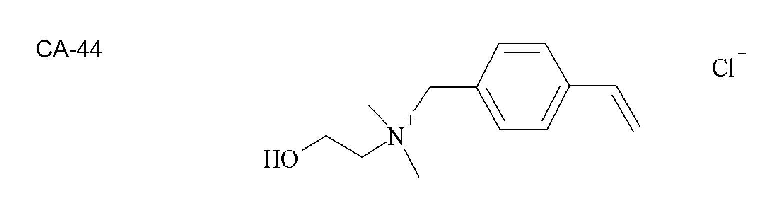

Suitable examples of phosphonium monomers include:

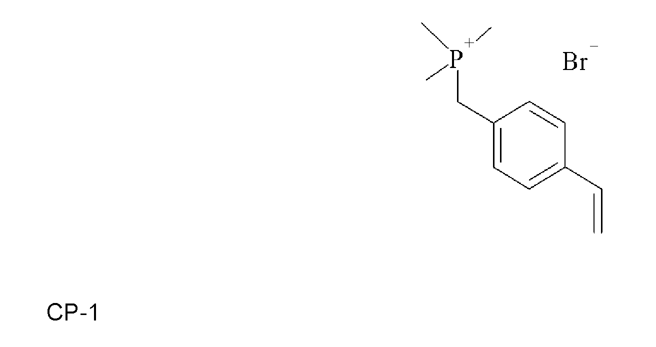

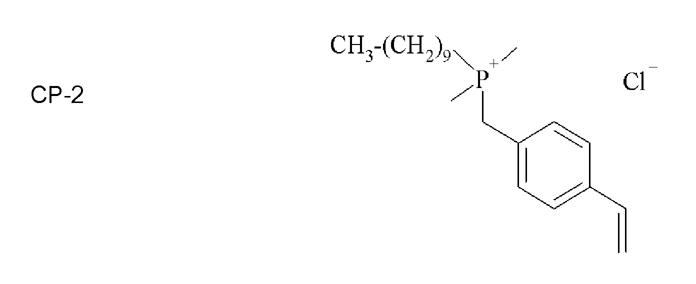

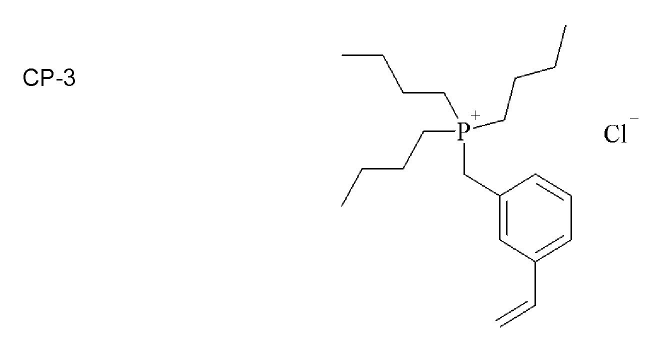

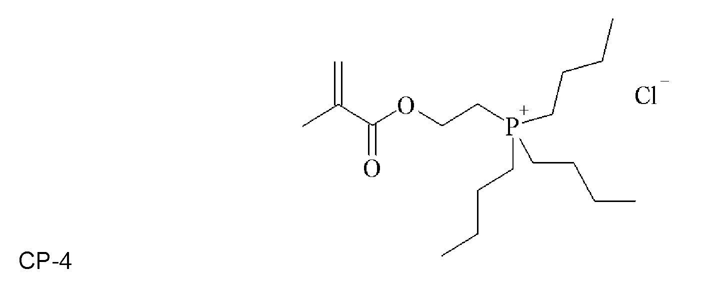

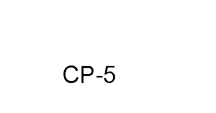

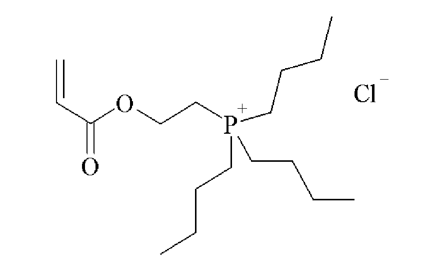

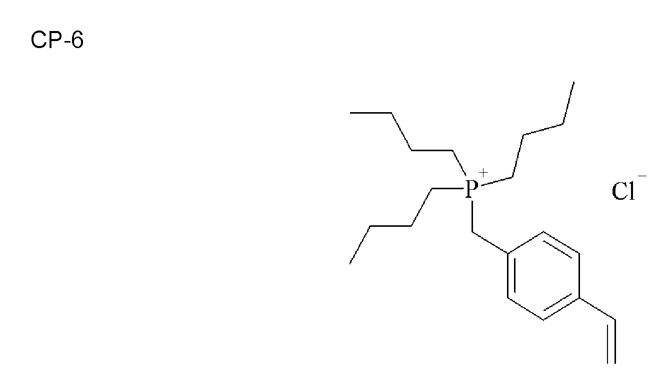

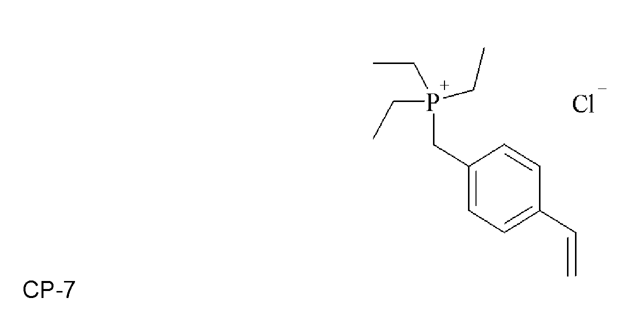

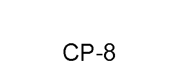

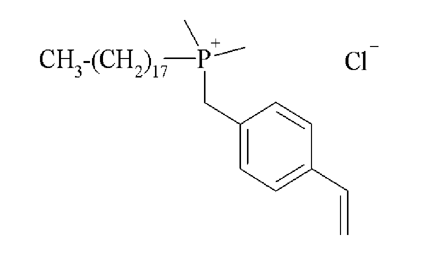

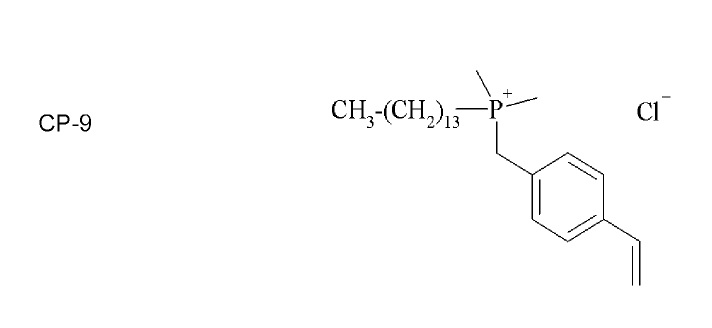

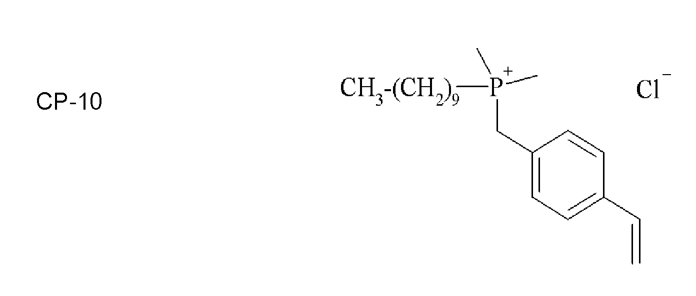

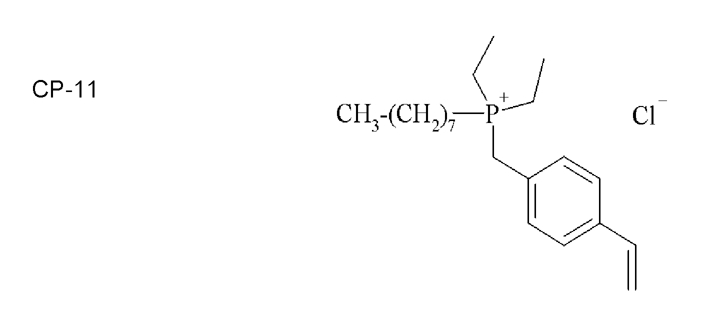

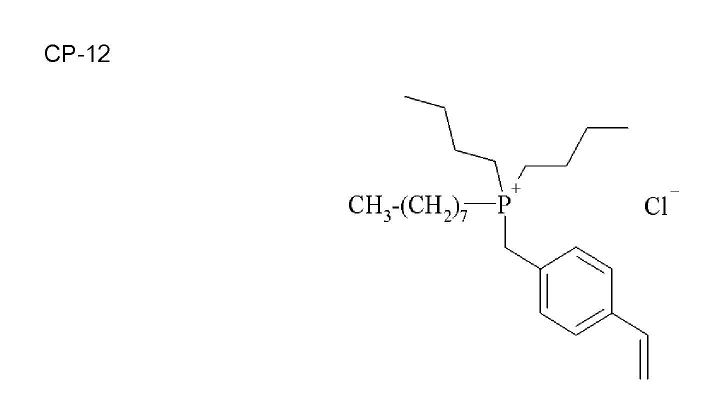

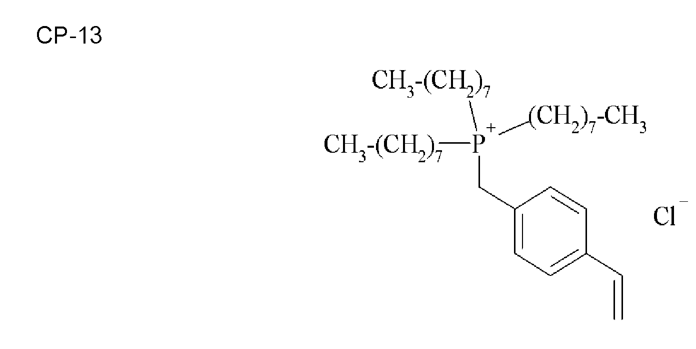

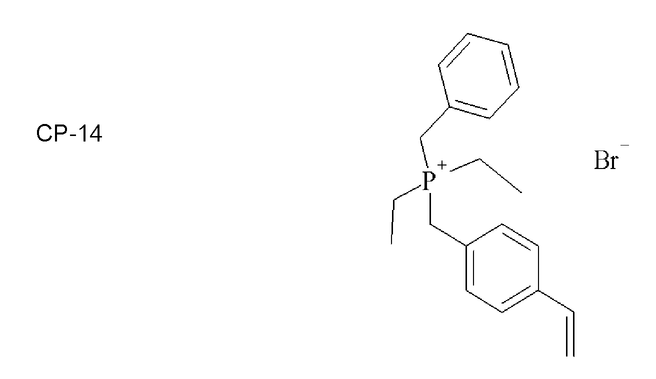

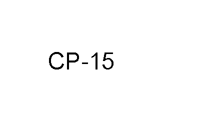

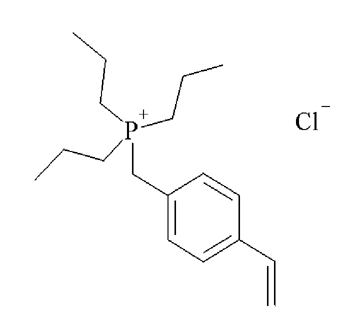

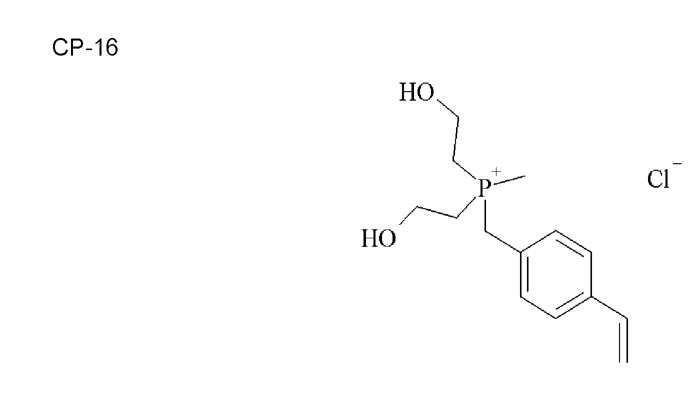

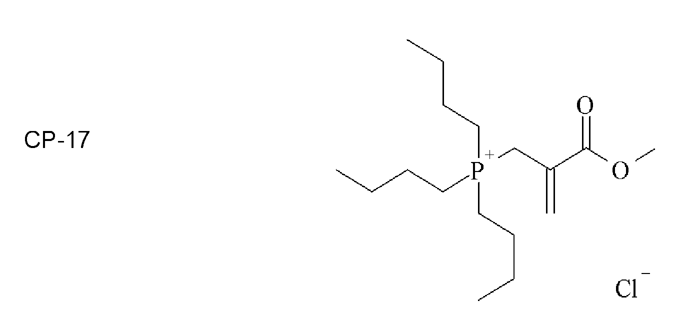

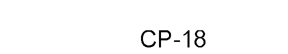

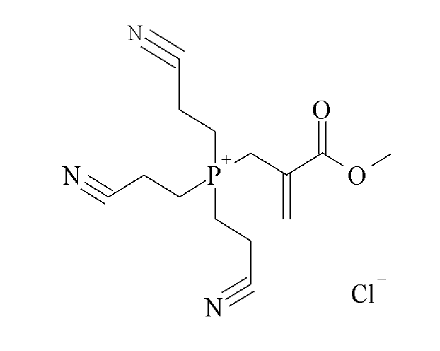

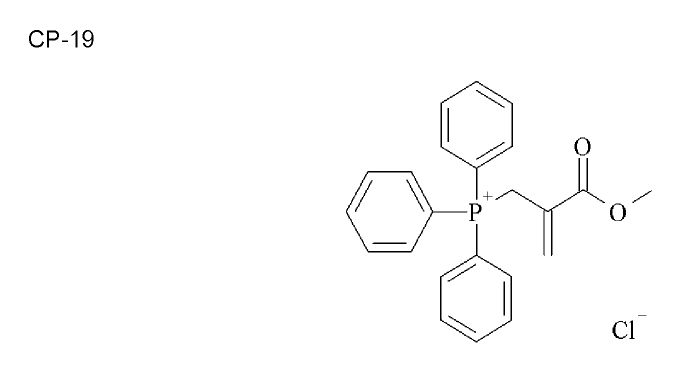

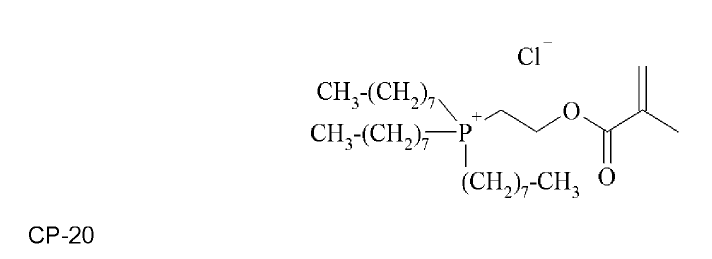

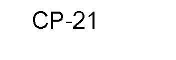

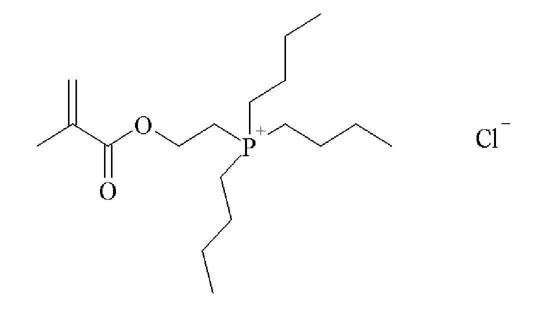

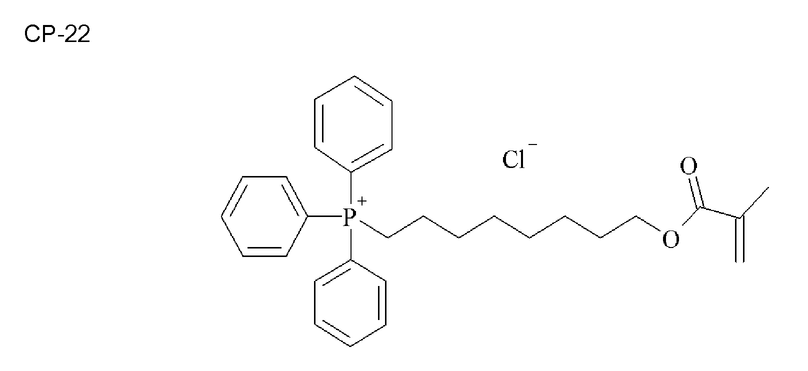

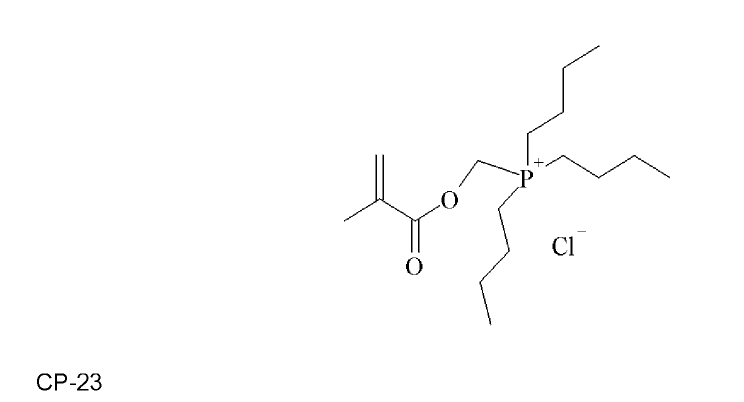

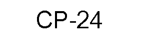

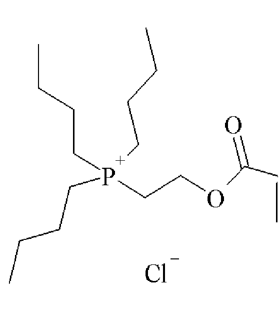

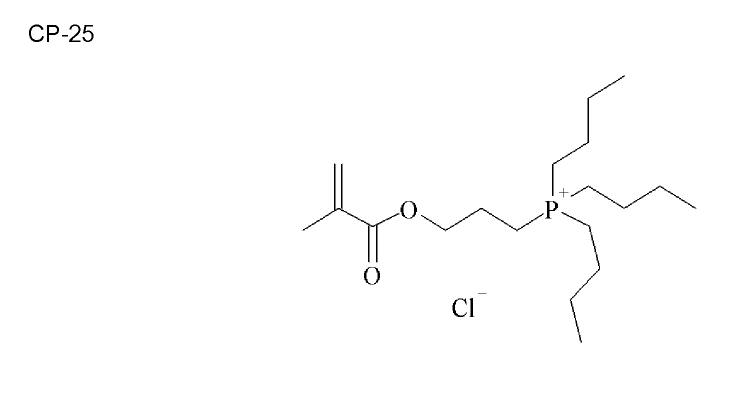

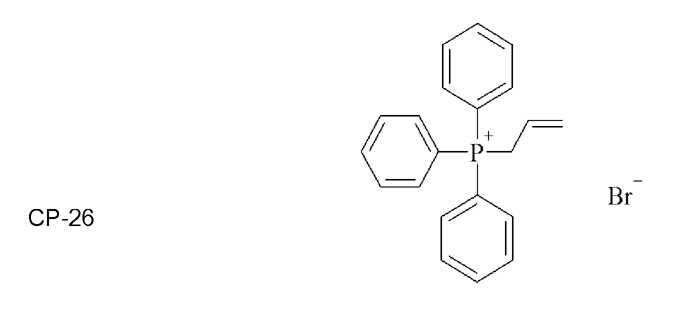

Suitable examples of sulfonium monomers include:

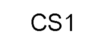

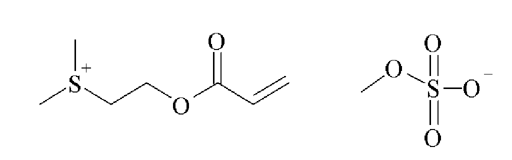

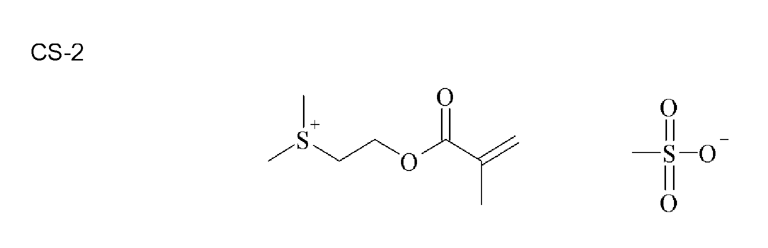

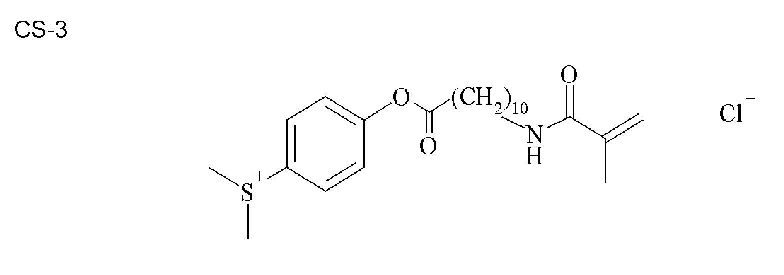

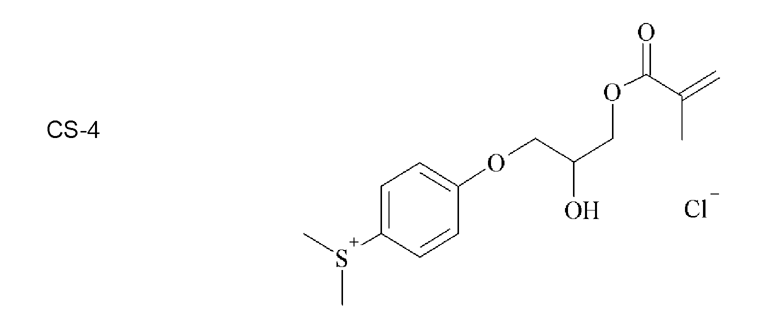

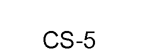

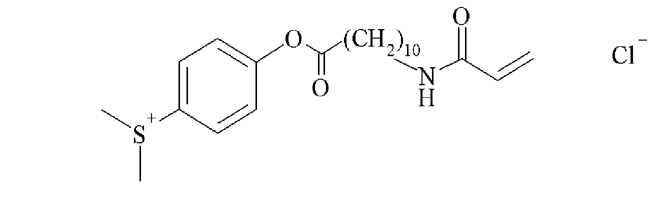

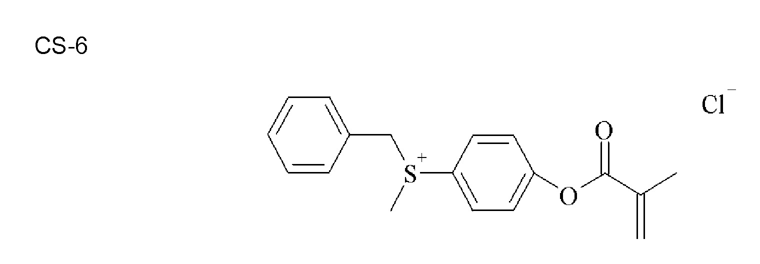

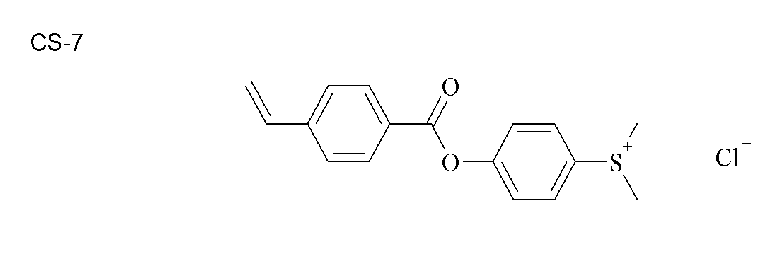

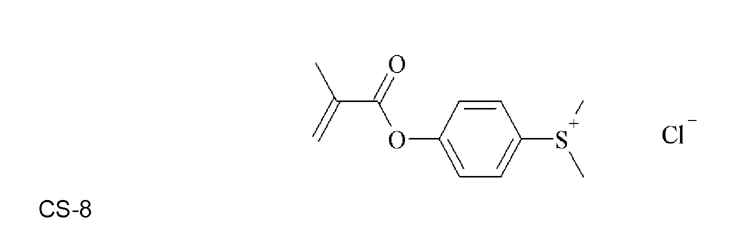

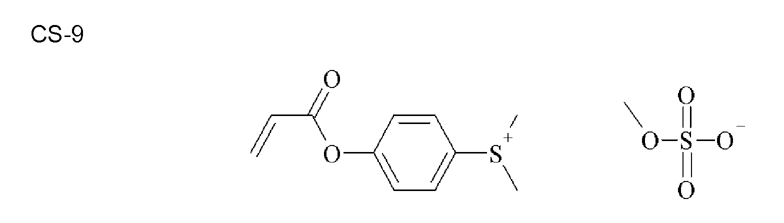

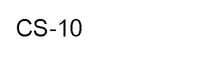

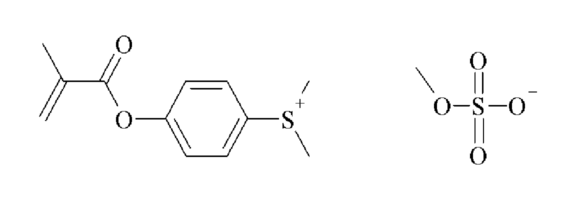

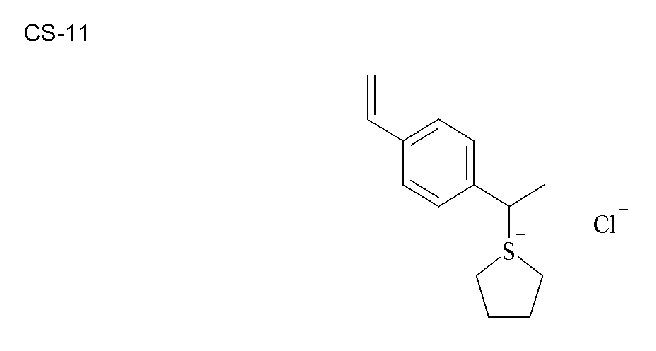

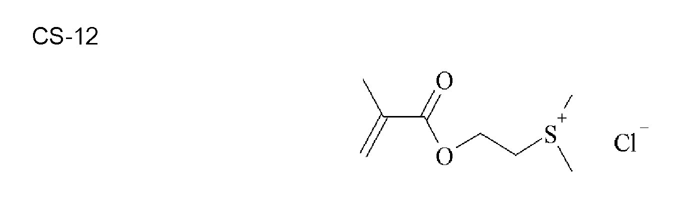

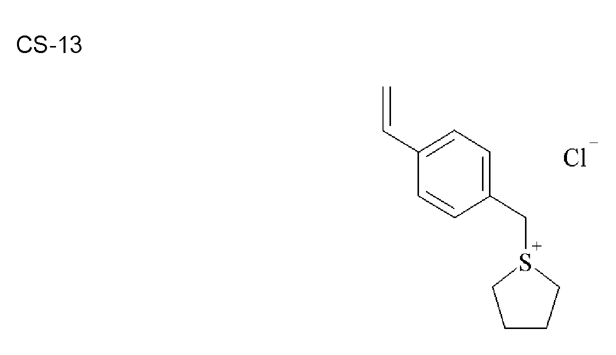

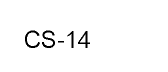

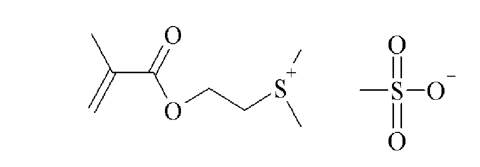

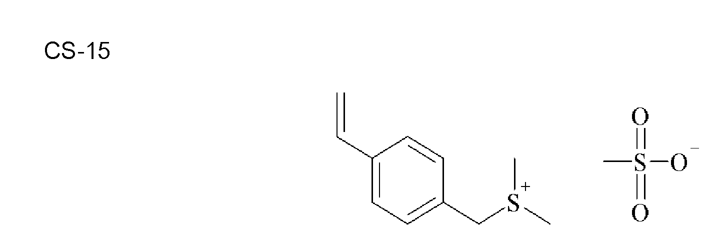

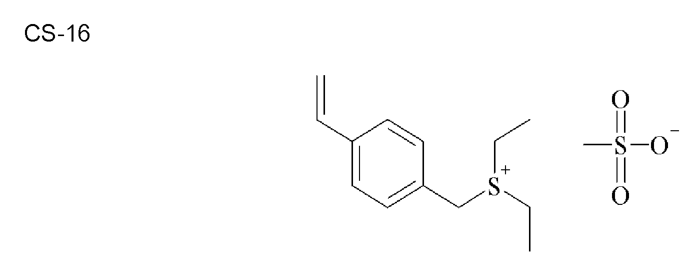

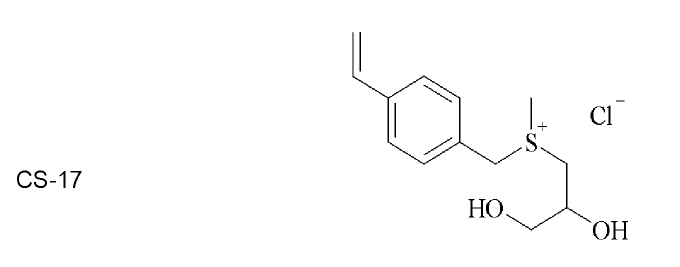

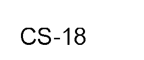

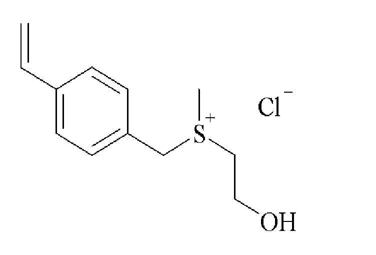

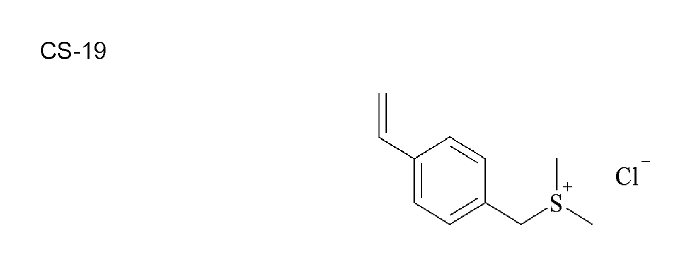

In a further embodiment of the process for preparing cationized fumed silica, according to the present invention, the cationic monomers are preferably aminofunctional monomers that become cationic at a pH < 7.
Suitable examples of aminofunctional monomers include:

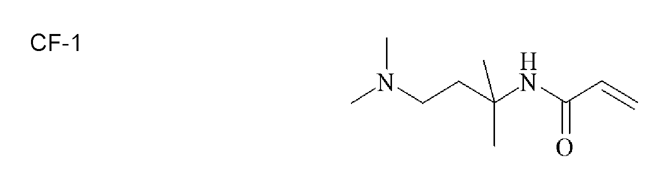

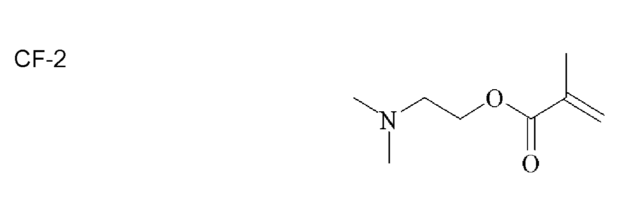

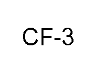

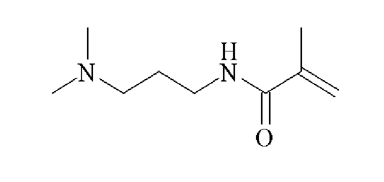

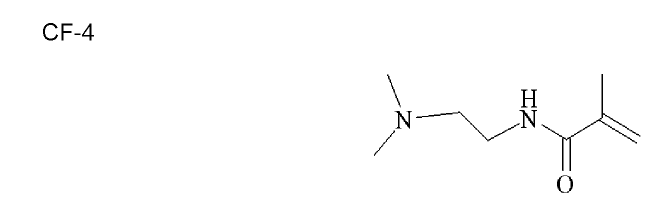

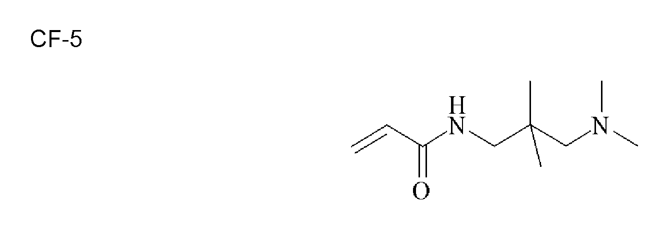

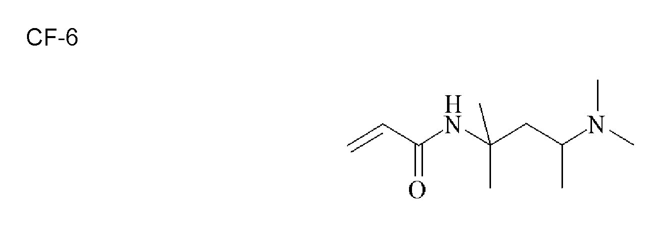

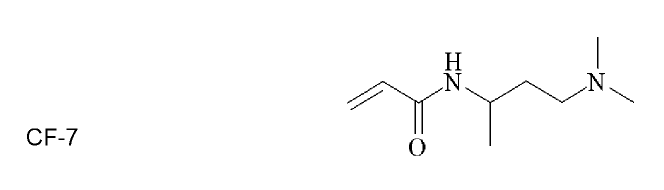

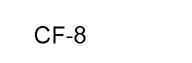

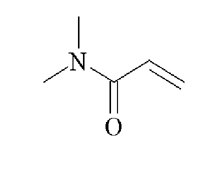

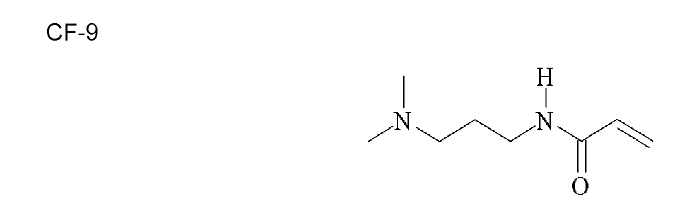

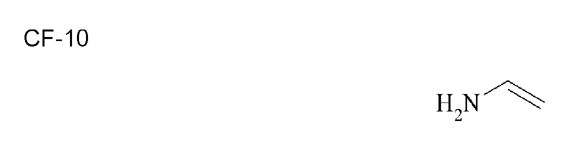

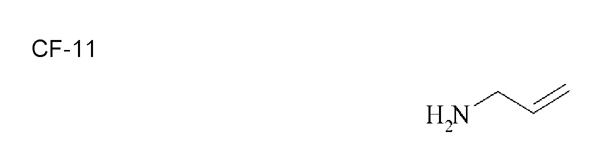

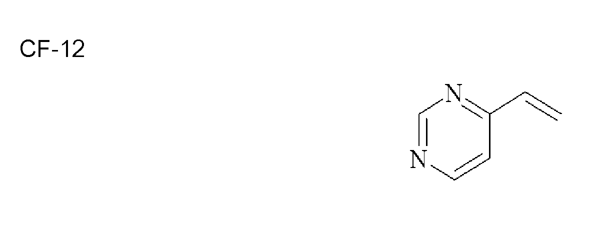

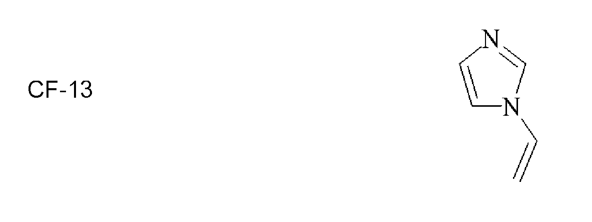

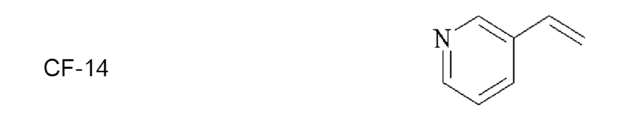

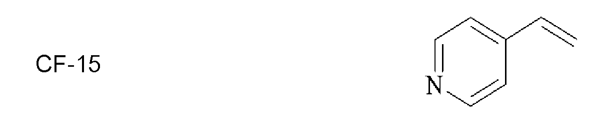

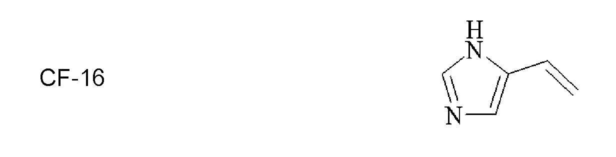

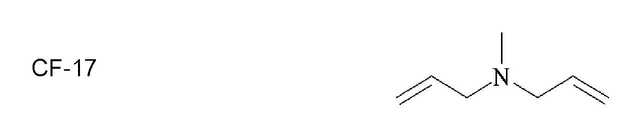

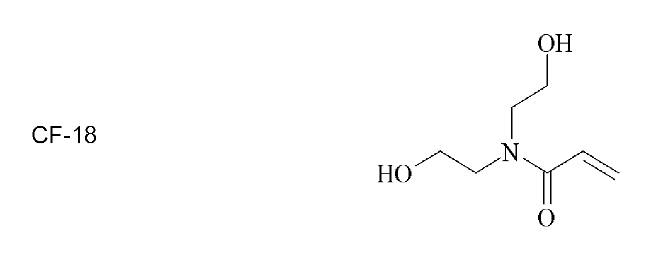

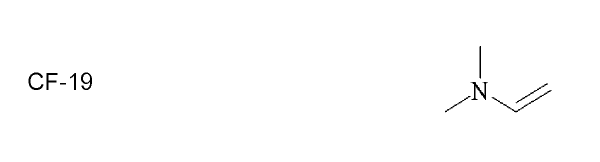

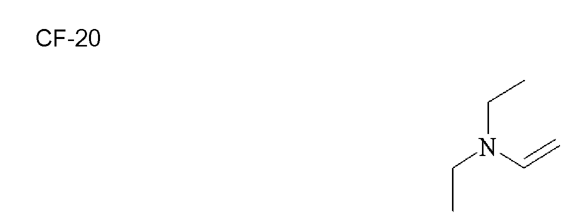

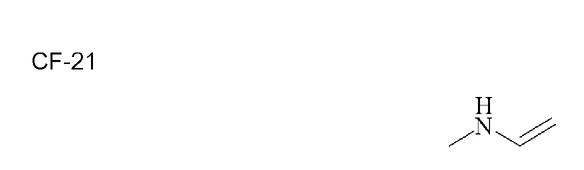

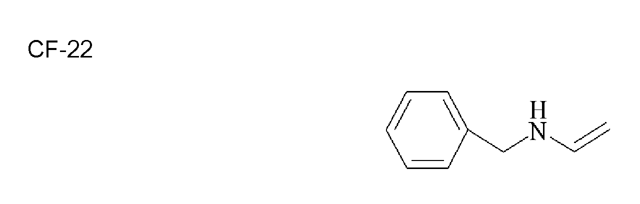

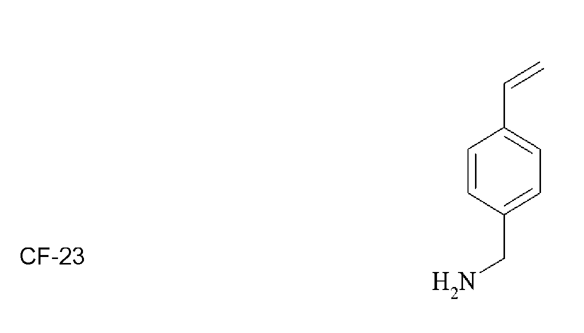

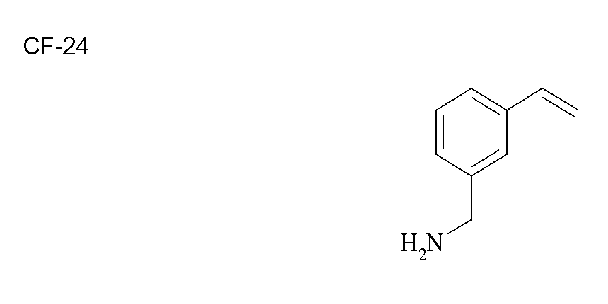

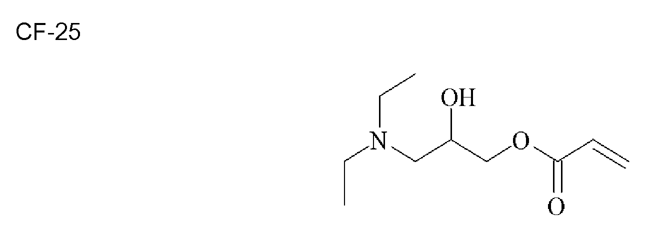

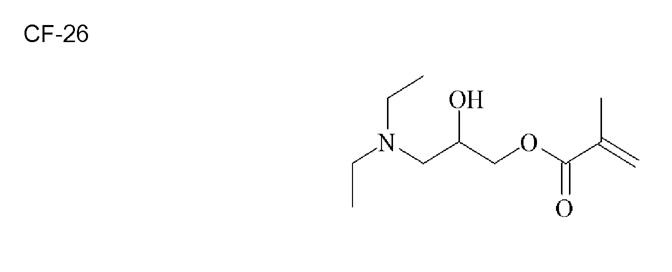

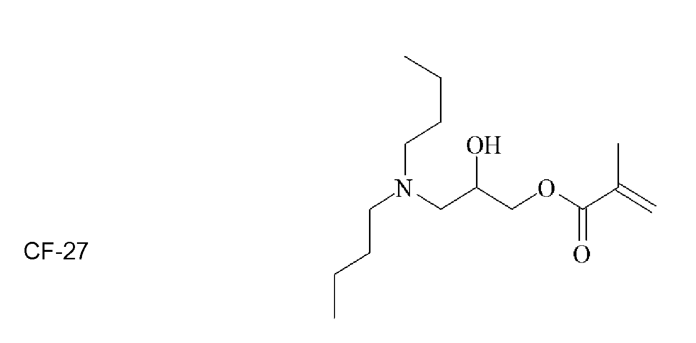

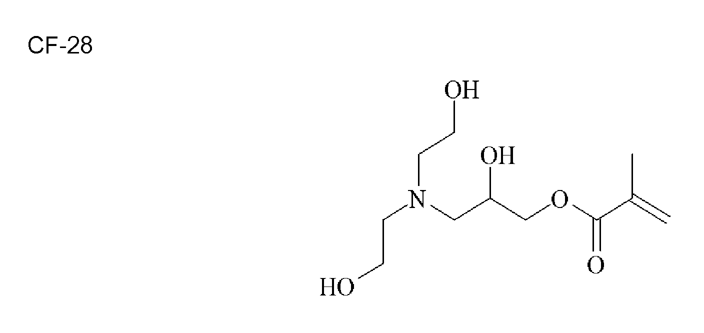

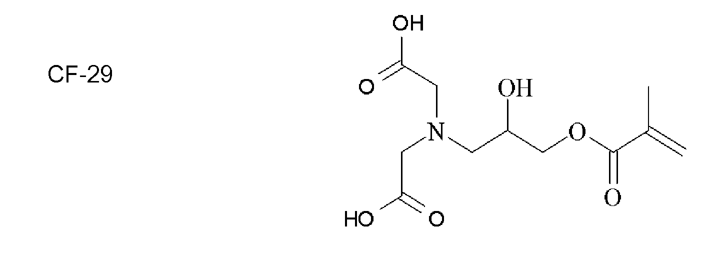

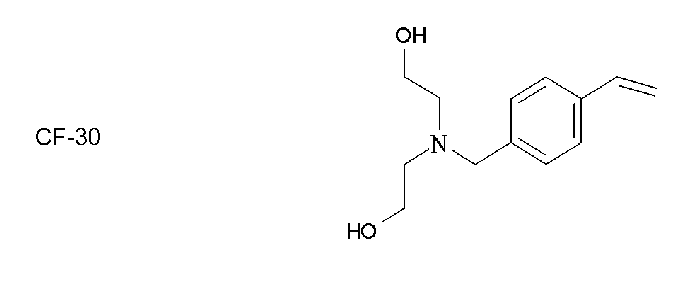

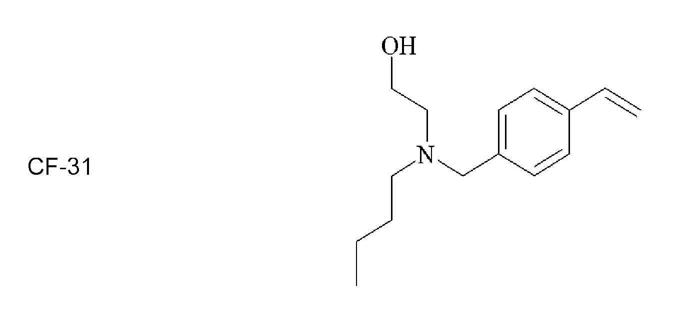

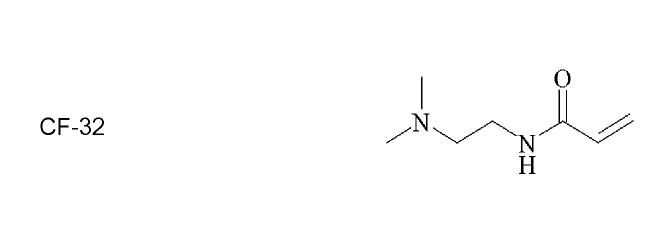

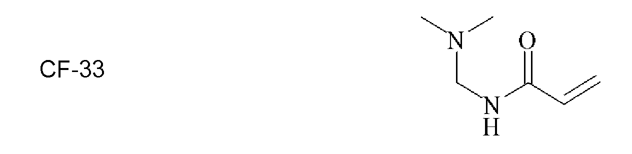

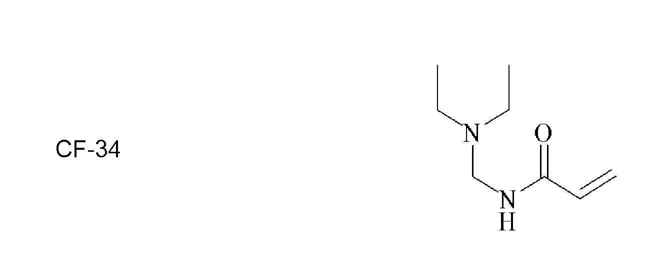

Amphoteric monomers are monomers that are anionic at high pH and cationic at low pH.

Suitable examples of amphoteric monomers include:

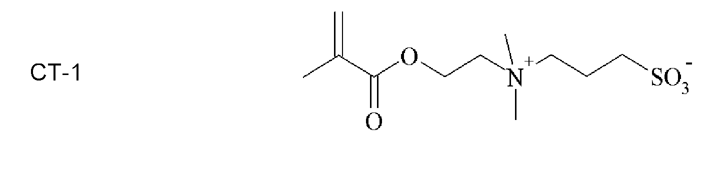

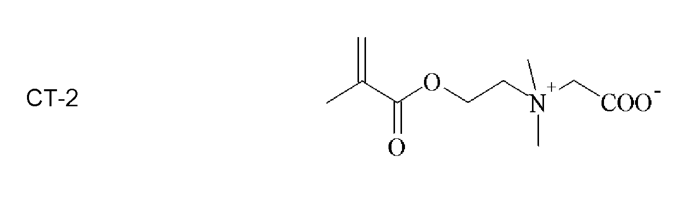

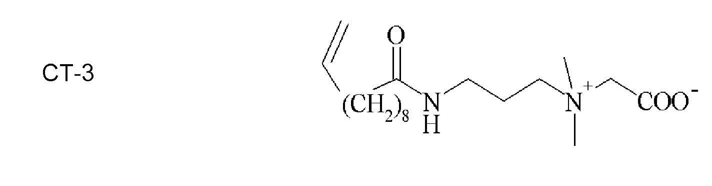

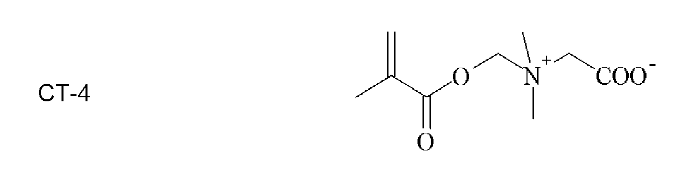

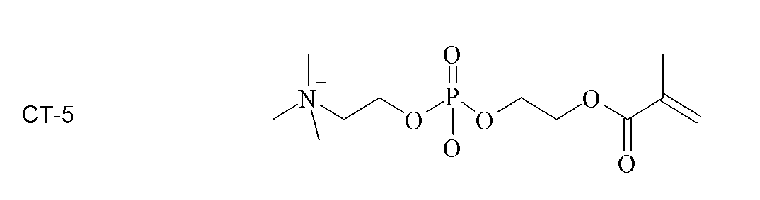

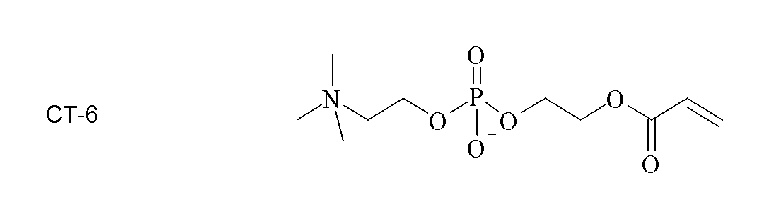

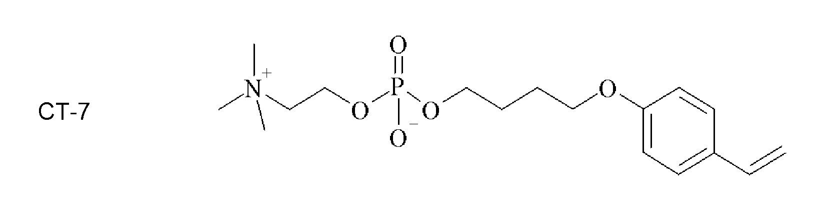

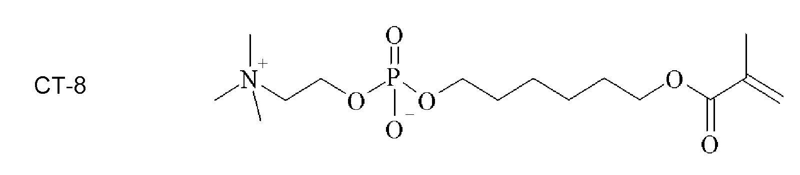

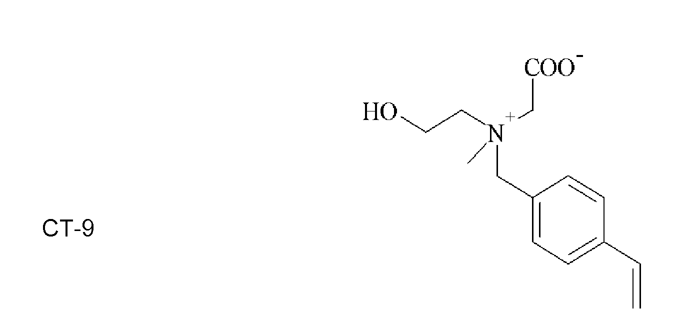

### Reactive monomers

A reactive monomer has a functional group having reactivity to a silanol group on the surface of the fumed silica. Aminoalkyl glycidyl ethers and aminoalkoxysilanes are examples of cationic reactive monomers. The covalent binding of an alkoxy silane monomer to the surface of the fumed silica is proven via ultrafiltration or dialysis experiments.
Suitable examples of reactive monomers include:

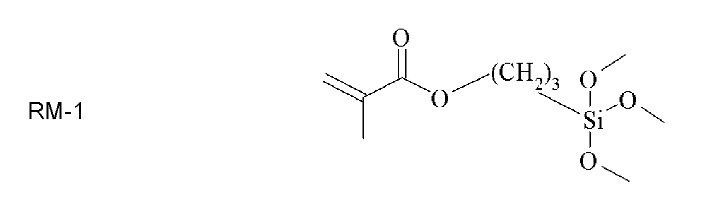

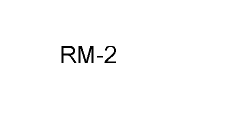

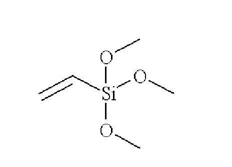

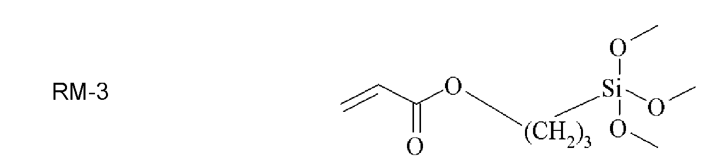

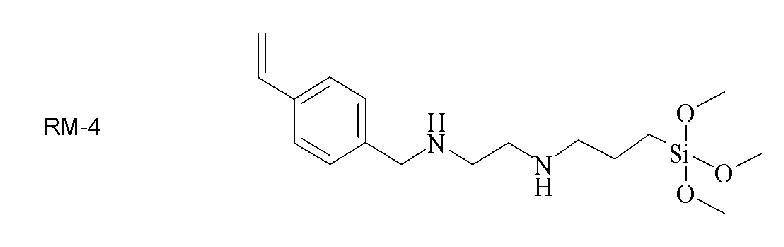

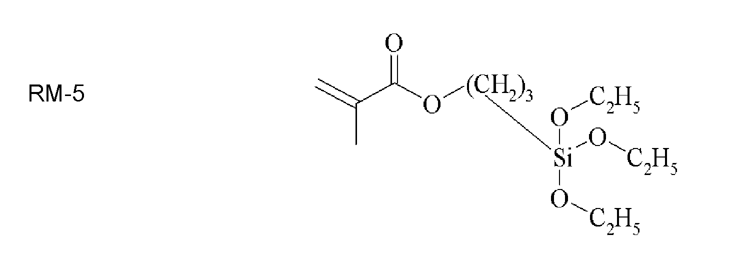

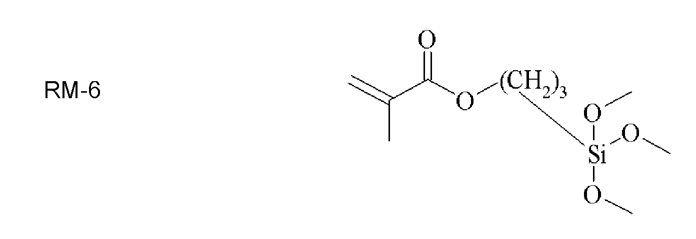

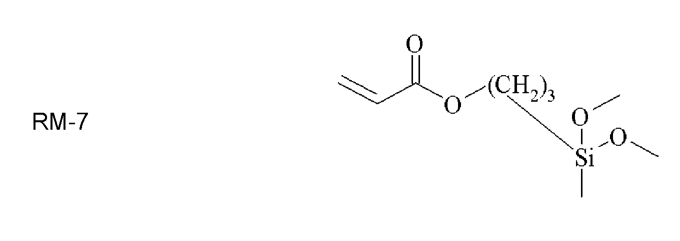

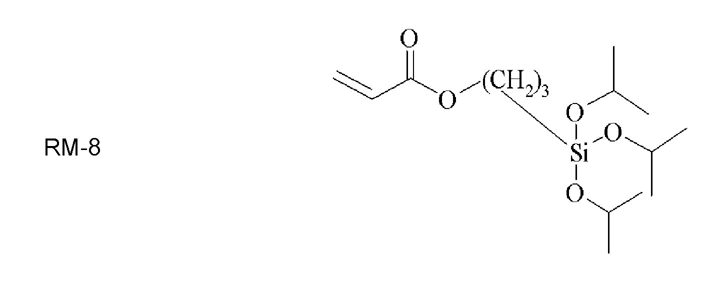

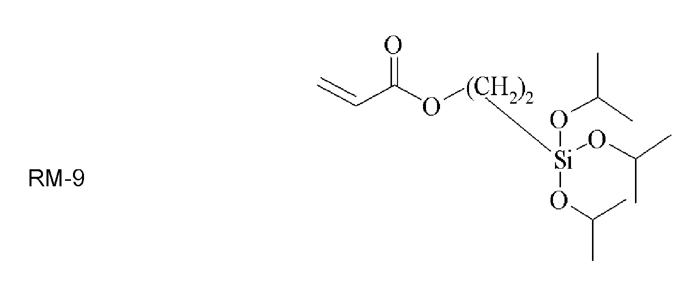

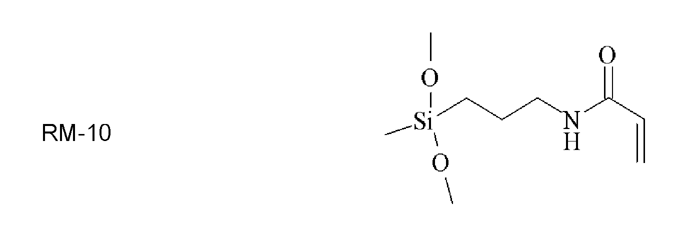

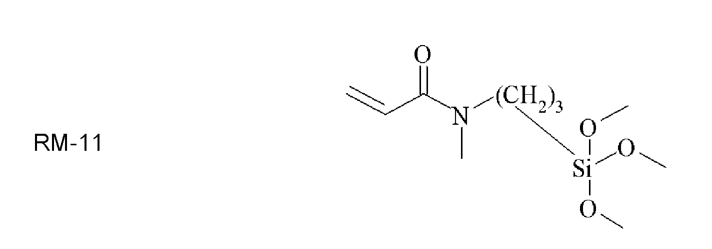

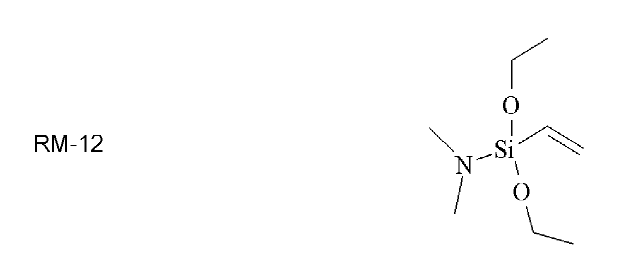

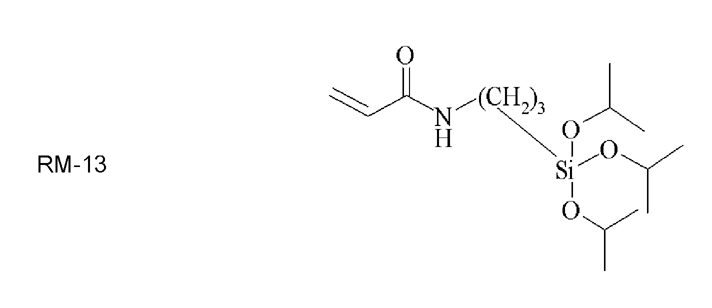

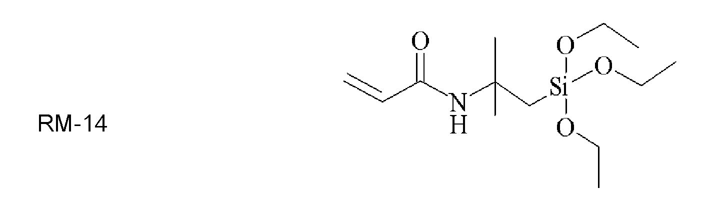

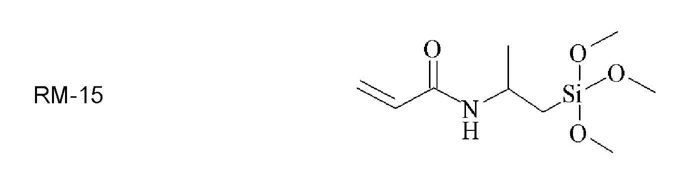

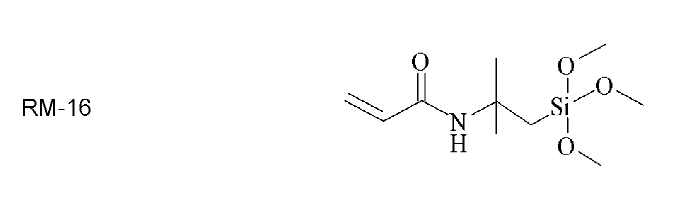

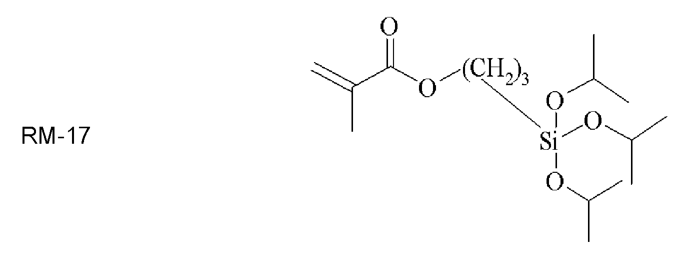

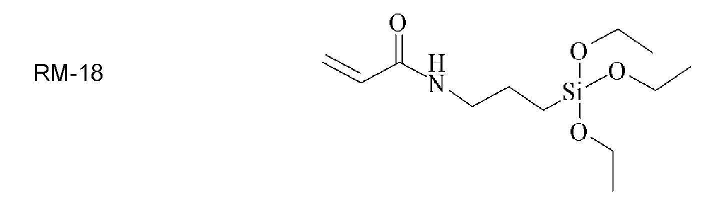

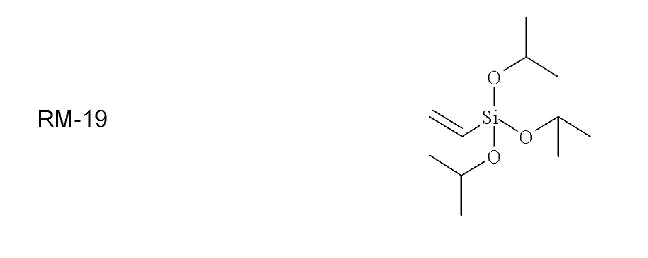

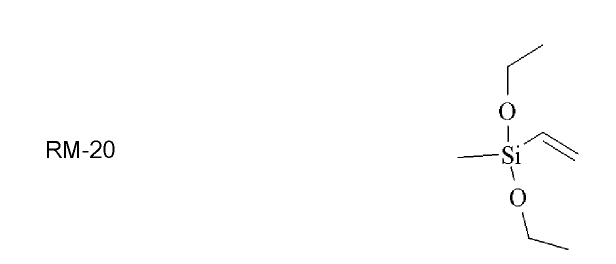

### Interacting monomers

Interacting monomers interact with the surface of the fumed silica, but do not form a covalent bond. They can be used for different purposes. For example, the inclusion in the cationic polymer of monomers like MPEG 350 (compound IM-5) ensures a steric stabilization, due to the formation of pendant PEO chains. Another purpose may be to set the best balance between the hydrophobic / hydrophilic character of the fumed silica. The cationized fumed silica becomes more hydrophobic in the sequence compound IM-1, compound IM-2, compound IM-3 and compound IM-4.
Suitable examples of interacting monomers include:

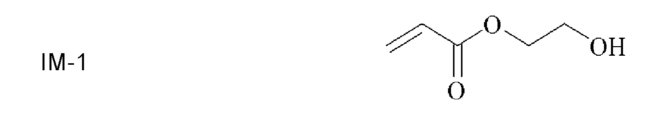

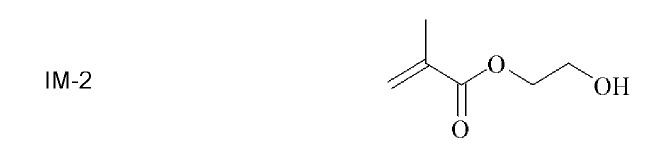

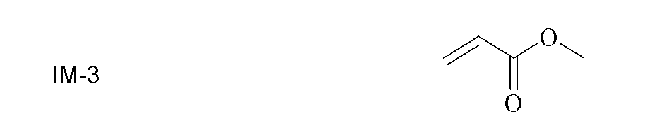

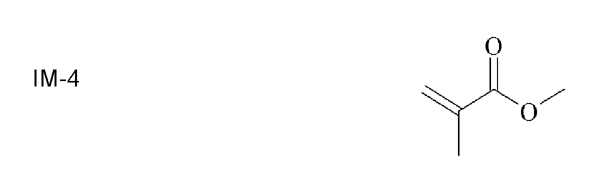

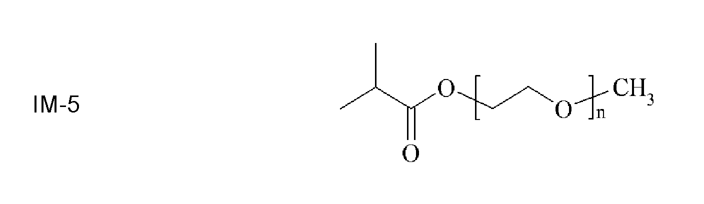

Other non-cationic monomers which are suitable for copolymerizing with the at least one cationic monomer include: vinyl acetate, n-butyl acrylate, tert.butyl acrylate, ethyl acrylate, n-propyl acrylate, isopropyl acrylate, stearyl acrylate, cetyl acrylate, benzyl acrylate, norbornyl acrylate, ethyl methacrylate, n-propyl methacrylate, isopropyl methacrylate, stearyl methacrylate, cetyl methacrylate, benzyl methacrylate, norbornyl methacrylate, acryl amide, methyl acryl amide, n-butyl acryl amide, tert.butyl acryl amide, ethyl acryl amide, n-propyl acryl amide, isopropyl acryl amide, stearyl acryl amide, cetyl acryl amide, benzyl acryl amide, norbornyl acryl amide, methacryl amide, methyl methacryl amide, n-butyl methacryl amide, tert.butyl methacryl amide, ethyl acryl amide, n-propyl methacryl amide, isopropyl methacryl amide, stearyl methacryl amide, cetyl methacryl amide, benzyl methacryl amide, norbornyl methacryl amide, vinylcaprolactam, vinyl acetamide, vinylformamide, isopropenyl alcohol, allyl alcohol, vinyl pyrolidone, vinyl caprolactam, acrylic acid, methacrylic acid, crotonic acid, fumaric acid, maleic acid, itaconic acid, fumaric acid mono alkyl esters, maleic acid mono alkyl esters, itaconic acid monoalkyl esters, styrene, α-methyl styrene, para-methyl styrene, versatate esters, acrylonitrile, methacrylonitrile, vinyl chloride, vinylidene chloride, maleic acid anhydride, N-methylol acrylamide, N-methylol methacrylamide, ethene, propene, butadiene, isoprene, glycidyl acrylate, glycidyl methacrylate, 4-acetoxy styrene, acrolein, 2-acrylamido-2-methyl-1-propanesulfonic acid, acrylic anhydride, N-acryloxy succinimide, acryloyl chloride, N-acryloylmorpholine, N-allylacrylamide, allylglycidylether, allyl methacrylate, allyl acryaltebisphenol acetone dimethacrylate, 2-bromoethyl acrylate, 4-bromostyrene, 1,4-butane diol dimethacrylate, 1,4-butane diol diacrylate, 1,2-ethane diol dimethacrylate, 1,2-ethane diol diacrylate, N-(isobutoxymethyl)methacrylamide, N-(isobutoxymethyl)acrylamide, 2-carboxyethyl acrylate, chloromethyl styrene, citraconic anhydride, crotyl acrylate, crotyl methacrylate, 2-cyano ethyl acrylate, 1,4-cyclohexanediol dimethacrylate, 1,4-cyclohexanediol diacrylate, N-cyclohexyl acrylamide, cyclohexyl acrylate, cyclohexyl methacrylate, N,N-allylacrylamide. Diallyl fumarate, di(n-butyl) itaconate, diethyl maleate, diethyl fumarate, 2-ethylhexyl acryalte, 2-ethylhexyl methacrylate, di-2-ethyl hexyl maleate, 2,3-dihydroxypropyl methacrylate, 2,3-dihydroxypropyl acrylate, n-dodecyl acrylate, n-dodecyl methacrylate, ethyl 2-cyano acrylate, 2-ethylthio ethyl methacrylate, glycerol monoacrylate, glycerol monomethacrylate, glycerol trimethacrylate, N,N'-hexamethylebisacrylamide, 4-hydroxybutyl acrylate, 4-hydroxybutyl methacrylate, 2-hydroxyethyl acrylate, 2-hydroxyethyl methacrylate, 2-methoxyethyl acrylate, 2-methoxyethyl methacrylate, 2-methoxypropyl acrylate, 2-methoxypropyl methacrylate, N-methyl-N-vinylacetamide, 2-N-morpholinoethyl methacryalte, pentaerytritol tetraacrylate, pentaerytritol triacrylate, pentaerytritol triallyl ether, 2-phenoxyethyl acrylate, polyethylene glycol mono acrylate, polyethylene glycol mono methacrylate, polyethylene glycol diacrylate, polyethylene glycol dimethacrylate, polypropylene glycol mono acrylate, polypropylene glycol mono methacrylate, polypropylene glycol diacrylate, polypropylene glycol dimethacrylate, 4- styrene sulfonic acid, 3-sulfopropyl acrylate, tripropylene glycol diacrylate, 1,1,1-trimethylolpropane diallyl ether, trimethylolpropane monoallyl ether, trimethylolpropane triacrylate, trimethylolpropane trimethacrylate, tripropylene glycol diacrylate, viyl azlactone, vinyl carbazole, vinyl-4-hydroxybutyl ether, N-vinyl-N-methylacetamide, vinyl methyl sulfone, vinyl sulfonic acid, N-vnyl urea, butanediol divinyl ether, 1,1,1-tris(hydroxymethyl)propane trimethacrylate, cyclohexyl vinyl ether, 2,2,4-trimethyl-1 ,3-pentanediol dimethacrylate, diacrylamidoacetic acid, acryloylmorpholine, N-vinylsuccinimide, acrylamidoglycolic acid, vinyl benzoic acid, diethylene glycol bis(methacrylate), 2-isocyanatoethyl methacrylate, acryloyl chloride, methacryloyl chloride and 2-acrylamido-2-methylpropanesulfonic acid.

### Ink-jet recording material

Objects of the present invention have been realized by an ink-jet recording material comprising a support and at least one ink-receiving layer, said ink-receiving layer containing a binder and a cationized fumed silica obtainable by polymerizing at least one cationic monomer and at least one non-cationic monomer in the presence of a fumed silica. The preferred binder in the ink-jet receiving layer, according to the present invention, is a polyvinyl alcohol.

Objects of the present invention have also been realized by a process for preparing an ink-jet recording material comprising the steps of: (i) coating a dispersion containing a cationized fumed silica dispersion obtainable by the above-described process onto said support. A stable coating dispersion, containing polyvinylalcohol and a cationized fumed silica is thereby obtained.

The images printed with the ink-jet recording material coated with this coating dispersion exhibited a high image quality with high gloss, high colour densities, no bleeding and a fast drying time.

### Support

The support for use in the ink-jet recording material according to the present invention can be chosen from paper type and polymeric type supports well-known from photographic technology. Paper types include plain paper, cast coated paper, polyethylene coated paper and polypropylene coated paper. Polymeric supports include cellulose acetate propionate or cellulose acetate butyrate, polyesters such as polyethylene terephthalate and polyethylene naphthalate, polyamides, polycarbonates, polyimides, polyolefins, poly(vinylacetals), polyethers and polysulfonamides. Other examples of useful high-quality polymeric supports for the present invention include opaque white polyesters and extrusion blends of polyethylene terephthalate and polypropylene. Polyester film supports and especially poly(ethylene terephthalate) are preferred because of their excellent properties of dimensional stability. When such a polyester is used as the support material, a subbing layer may be employed to improve the bonding of the ink-receiving layer to the support. Useful subbing layers for this purpose are well known in the photographic art and include, for example, polymers of vinylidene chloride such as vinylidene chloride/acrylonitrile/acrylic acid terpolymers or vinylidene chloride/methyl acrylate/itaconic acid terpolymers.

The support according to this invention may also be made from an inorganic material, such as a metal oxide or a metal (e.g. aluminium and steel).

### Ink-receiving layer and optional auxiliary layers

The ink-receiving layer of in the ink-jet recording material, according to the present invention, contains at least one binder and a cationized fumed silica. Fillers other than a cationized fumed silica may be present in the ink-receiving layer.

The ink-receiving layer may consist of just one single layer, or alternatively it may be composed of two or more layers. A particular type of an extra top ink-receiving layer is a so-called "gloss improving layer", meaning a thin layer which achieves a gloss of more than 30 at a 60° angle with a REFO® 60 available from Dr. Bruno Lange GmbH & Co. This gloss property can be achieved by the use of swellable polymers and/or (in)organic fillers with a particle size smaller than 500 nm.

In the case of double or multiple ink-receiving layers the light-stabilizer may be incorporated in just one layer, or in several layers or in all layers. It may also be present in additional auxiliary layers, if present, such as an anti-curl backing layer.

The ink-receiving layer or in at least one of the ink-receiving layers, in the case of multiple layers, may also further contain a cationic substance acting as mordant.

The ink-receiving layer, and an optional auxiliary layer, such as a backing layer for anti-curl purposes, may further contain well-known conventional ingredients, such as surfactants serving as coating aids, hardening agents, plasticizers, light-stabilizers, a pH adjuster, antistatic agents, whitening agents and matting agents.

The ink-receiving layer and the optional auxiliary layer(s) may also be crosslinked to provide such desired features as waterfastness and non-blocking characteristics. The crosslinking is also useful in providing abrasion resistance and resistance to the formation of fingerprints on the element as a result of handling.

The different layers can be coated onto the support by any conventional coating technique, such as dip coating, knife coating, extrusion coating, spin coating, slide hopper coating and curtain coating.

### Binder

A preferred binder for use in the ink-jet recording material according to the present invention is a polyvinylalcohol (PVA) i.e. polyvinyl alcohol, a vinylalcohol copolymer or modified polyvinyl alcohol. Suitable polyvinylalcohols are e.g. CELVOL 540® available from CELANESE, Poval 117® and Poval 217® available form KU RARAY and Gohsenol GH23A® from NIPPON GOHSEI. The polyvinyl alcohol is preferably a cationic type polyvinyl alcohol, such as the cationic polyvinyl alcohol grades from KURARAY, such as POVAL CM318®, POVAL C506®, POVAL C118®, and GOHSEFIMER K210®from NIPPON GOHSEI.

Other suitable binders for use in the ink-receiving layer of the ink-jet recording material according to the present invention include: hydroxyethyl cellulose, hydroxypropyl cellulose, hydroxyethylmethyl cellulose, hydroxypropyl methyl cellulose, hydroxybutylmethyl cellulose, methyl cellulose, sodium carboxymethyl cellulose, sodium carboxymethylhydroxethyl cellulose, water soluble ethylhydroxyethyl cellulose, cellulose sulfate, polyvinyl acetate, polyvinyl acetal, polyvinyl pyrrolidone, polyacrylamide, acrylamide/acrylic acid copolymer, polystyrene, styrene copolymers, acrylic or methacrylic polymers, styrene/acrylic copolymers, ethylene-vinylacetate copolymer, vinyl-methyl ether/maleic acid copolymer, poly(2-acrylamido-2-methyl propane sulfonic acid), poly(diethylene triamine-co-adipic acid), polyvinyl pyridine, polyvinyl imidazole, polyethylene imine epichlorohydrin modified, polyethylene imine ethoxylated, polyethylene oxide, polyurethane, melamine resins, gelatin, carrageenan, dextran, gum arabic, casein, pectin, albumin, starch, collagen derivatives, collodion and agar-agar.

### Filler

When an additional filler is used in the ink-receiving layer of the ink-jet recording material according to the present invention, it is preferably an inorganic filler, which can be chosen from neutral, anionic and cationic filler types. Useful fillers include e.g. silica, talc, clay, hydrotalcite, kaolin, diatomaceous earth, calcium carbonate, magnesium carbonate, basic magnesium carbonate, aluminosilicate, aluminum trihydroxide, aluminum oxide (alumina), titanium oxide, zinc oxide, barium sulfate, calcium sulfate, zinc sulfide, satin white, alumina hydrate such as boehmite, zirconium oxide or mixed oxides.

Preferably, the filler is a cationic type filler selected from alumina hydrates, aluminum oxides, aluminum hydroxides, aluminum silicates, and cationically modified silicas.

A preferred type of alumina hydrate is crystalline boehmite, or γ-AlO(OH). Useful types of boehmite include, in powder form, DISPERAL, DISPERAL HP14 and DISPERAL 40 from SASOL, MARTOXIN VPP2000-2 and GL-3 from MARTINSWERK GmbH.; liquid boehmite alumina systems, e.g. DISPAL 23N4-20, DISPAL 14N-25, DISPERAL AL25 from SASOL. Patents on alumina hydrate include **EP 500021** A (ASAHI GLASS), **EP** **634286** A (ASAHI GLASS), **US 5624428** (KIMBERLY CLARK), **EP 742108** A (ASAHI GLASS), **US 6238047** (ASAHI GLASS), **EP 622244** A (CANON) and **EP 810101** A (CANON) .

Suitable cationic aluminum oxide (alumina) types for use in the ink-receiving layer of the ink-jet recording material according to the present invention include α-Al₂O₃ types, such as NORTON E700, available from SAINT-GOBAIN CERAMICS & PLASTICS INC., and γ-Al₂O₃ types, such as ALUMINUM OXID C from DEGUSSA; other aluminum oxide grades, such as BAIKALOX CR15 and CR30 from BAIKOWSKI CHEMIE; DURALOX grades and MEDIALOX grades from BAIKOWSKI CHEMIE, BAIKALOX CR80, CR140, CR125, B105CR from BAIKOWSKI CHEMIE; CAB-O-SPERSE PG003® available from CABOT, CATALOX GRADES and CATAPAL GRADES available from SASOL, such as PLURALOX HP14/150; colloidal Al₂O₃ types, such as ALUMINASOL® 100; ALUMINASOL® 200, ALUMINASOL® 220, ALUMINASOL® 300, and ALUMINASOL® 520 available from NISSAN CHEMICAL INDUSTRIES or NALCO® 8676 available from ONDEO NALCO.

Other useful cationic inorganic fillers include aluminum trihydroxides such as Bayerite, or α-Al(OH)₃, such as PLURAL BT, available from SASOL, and Gibbsite, or γ-Al(OH)₃, such as MARTINAL® grades from MARTINSWERK GmbH, MARTIFIN® grades, such as MARTIFIN® OL104, MARTIFIN® OL 107 and MARTIFIN® OL111 from MARTINSWERK GmbH, MICRAL® grades, such as MICRAL® 1440, MICRAL® 1500; MICRAL® 632; MICRAL® 855; MICRAL® 916; MICRAL® 932; MICRAL® 932CM; MICRAL® 9400 from JM HUBER COMPANY ; HIGILITE® grades, e.g. HIGILITE® H42 or HIGILITE® H43M from SHOWA DENKA K.K..

Another suitable type of cationic filler for use in the ink-receiving layer of in the ink-jet recording material according to the present invention is a zirconium oxide such as NALCO® OOSS008 available from ONDEO NALCO, an acetate stabilized ZrO₂ such as ZR20/20, ZR50/20, ZR100/20 and ZRYS4 trademarks from NYACOL NANO TECHNOLOGIES.

Suitable mixed oxides for use in the ink-receiving layer of in the ink-jet recording material according to the present invention include SIRAL grades from SSASOL, colloidal metal oxides from NALCO such as NALCO® 1056, NALCO® TX10496, NALCO® TX11678.

Another preferred type of inorganic filler is silica, which can be used as such in its anionic form or after cationic modification. Silica as filler in ink-receiving elements is disclosed in numerous old and recent patents, e.g. **US 4892591** (MIZUSAWA INDUSTRIAL CHEM), **US 4902568** (CANON), **EP 373573** A (CIBA GEIGY), **EP 423829** A (OJI PAPER), **EP 487350** A (XEROX), **EP 493100** A (SANYO KOKUSAKU PULP), **EP 514633** A (SCHOELLER FELIX JUN PAPIER), etc.. The silica can be chosen from different types, such as crystalline silica, amorphous silica, precipitated silica, fumed silica, silica gel, spherical and non-spherical silica. The silica may contain minor amounts of metal oxides from the group Al, Zr, Ti. Suitable types of silica for use in the ink-receiving layer of the ink-jet recording material according to the present invention include AEROSIL® OX50 (BET surface area 50 ± 15 m²/g, average primary particle size 40 nm, SiO₂ content > 99.8%, Al₂O₃ content < 0.08%), AEROSIL® MOX170 (BET surface area 170 m²/g, average primary particle size 15 nm, SiO₂ content > 98.3%, Al₂O₃ content 0.3-1.3%), AEROSIL® MOX80 (BET surface area 80 ± 20 m²/g, average primary particle size 30 nm, SiO₂ content > 98.3%, Al₂O₃ content 0.3-1.3%), or other hydrophilic AEROSIL® grades available from DEGUSSA-HÜLS AG, which may give aqueous dispersions with a small average particle size (<500 nm).

In an alternative embodiment the filler may be chosen from organic particles such as polystyrene, polymethyl methacrylate, silicones, melamine-formaldehyde condensation polymers, urea-formaldehyde condensation polymers, polyesters and polyamides.

Mixtures of two or more inorganic and/or organic fillers may be used. However, most preferably the filler is an inorganic filler.

For obtaining glossy ink-receiving layers the particle size of the filler should preferably be smaller than 500 nm. In order to obtain a porous glossy layer which can serve as an ink-receiving layer for fast ink uptake the filler/binder ratio should be at least 4. Only at these high ratios the binder is no longer able to fill up all pores and voids created by the fillers in the coating. To achieve a sufficient porosity of the coating for fast ink uptake the pore volume of these high filler-content coatings should be higher than 0.1 ml/g of coated solids. This pore volume can be measured by gas adsorption (nitrogen) or by mercury diffusion.

In order to improve dispersibility of the inorganic filler particles, the ink-receiving layer may contain various inorganic salts, and acids or alkalis as pH adjusters.

### Cationic substance acting as a mordant

A cationic substance acting as a mordant may be used in combination with the cationized fumed silica present in the ink-receiving layer of the ink-jet recording material according to the present invention. Cationic substances acting as a mordant increase the capacity of the layer for fixing and holding the dye of the ink-droplets. A particularly suited compound is a poly(diallyldimethylammonium chloride) or, in short, a poly(DADMAC). These compounds are commercially available from several companies, e.g. ALDRICH, NALCO, CIBA, NITTO BOSEKI CO., CLARIANT, BASF and EKA CHEMICALS.

Other suitable cationic compounds for use in the ink-receiving layer of the ink-jet recording material according to the present invention include DADMAC copolymers such a copolymers with acrylamide, e.g NALCO® 1470 trade mark of ONDEO NALCO or PAS-J-81®, available NITTO BOSEKI CO., such as copolymers of DADMAC with acrylates, such as Nalco 8190®, available from ONDEO NALCO; copolymers of DADMAC with SO₂, such as PAS-A-1 or PAS-92, trademarks of NITTO BOSEKI CO., copolymer of DADMAC with maleic acid, e.g. PAS-410® available from NITTO BOSEKI CO., copolymer of DADMAC with diallyl(3-chloro-2-hydroxypropyl)amine hydrochloride, eg. PAS-880®,available NITTO BOSEKI CO., dimethylamine-epichlorohydrine copolymers, e.g. Nalco 7135®, available from ONDEO NALCO or POLYFIX 700, trade name of SHOWA HIGH POLYMER Co.; other POLYFIX grades which could be used are POLYFIX 601, POLYFIX 301, POLYFIX 301A, POLYFIX 250WS, and POLYFIX 3000 ; NEOFIX E-117, trade name of NICCA CHEMICAL CO., a polyoxyalkylene polyamine dicyanodiamine, and REDIFLOC 4150, trade name of EKA CHEMICALS, a polyamine; MADAME (methacrylatedimethylaminoethyl = dimethylaminoethyl methacrylate) or MADQUAT (methacryloxyethyltrimethylammonium chloride) modified polymers, e.g. ROHAGIT KL280, ROHAGIT 210, ROHAGIT SL144, PLEX 4739L, PLEX 3073 from RÖHM, DIAFLOC KP155 and other DIAFLOC products from DIAFLOC COo., and BMB 1305 and other BMB products from EKA CHEMICALS; cationic epichlorohydrin adducts such as POLYCUP 171 and POLYCUP 172, trade names from HERCULES CO.; from Cytec industries : CYPRO products, e.g. CYPRO 514/515/516, SUPERFLOC 507/521/567; cationic acrylic polymers, such as ALCOSTAT 567®, available from CIBA, cationic cellulose derivatives such as CELQUAT L-200, H-100, SC-240C, SC-230M, trade names of STARCH & CHEMICAL CO., and QUATRISOFT LM200, UCARE polymers JR125, JR400, LR400, JR30M, LR30M and UCARE polymer LK; fixing agents from CHUKYO EUROPE : PALSET JK-512, PALSET JK512L, PALSET JK-182, PALSET JK-220, WSC-173, WSC-173L, PALSET JK-320, PALSET JK-320L and PALSET JK-350; polyethyleneimine and copolymers, e.g. LUPASOL, trade name of BASF AG; triethanolaminetitanium-chelate, e.g. TYZOR, trade name of DU PONT CO.; copolymers of vinylpyrrolidone such as VIVIPRINT 111, trade name of ISP, a methacrylamido propyl dimethylamine copolymer; with dimethylaminoethylmethacrylate such as COPOLYMER 845 and COPOLYMER 937, trade names of ISP; with vinylimidazole, e.g. LUVIQUAT CARE, LUVITEC 73W, LUVITEC VP155 K18P, LUVITEC VP155 K72W, LUVIQUAT FC905, LUVIQUAT FC550, LUVIQUAT HM522, and SOKALAN HP56, all trade names of BASF AG; polyamidoamines, e.g. RETAMINOL and NADAVIN, trade marks of BAYERAG; phosphonium compounds such as disclosed in EP 609930 and other cationic polymers such as NEOFIX RD-5®, available from NICCA CHEMICAL CO..

### Lightstabilizers

Light stabilizers may be incorporated in the ink-jet recording material according to the present invention. Suitable light stabilizers for use in the ink-jet recording material according to the present invention include hindered amine light stabilizers (HALS) such as described in WO **02055618** (CIBA), **US 20030235706** (HEWLETT-PACKARD) **EP 1008457** A (JUJO PAPER), thioethers as described in **EP 1195259** A (OJI PAPER), **EP 1138509** A (MITSUBISHI PAPER MILLS & SEIKO EPSON) , **DE 10101309** metallic salts or metal complexes as described in **EP 1288007** A (TOMOEGAWA PAPER), **EP 1231071** A (ILFORD IMAGING), **EP 1080934** A (FERRANIA), **US 6344262** (ASAHI GLASS), **EP 1262328** A (SCHOELLER FELIX JUN FOTO) or UV absorbers as described in **EP 1174279** A (JUJO PAPER), **US 6641257** (AMERICAN INK JET), **EP 903246** A (OJI PAPER) or antioxidants such as hydroquinone derivatives e.g. as decribed in **US 6362348** (SEIKO EPSON), **WO 02055617** (CIBA), **WO 20001025350, EP 1029793** A (HANSHIN KASEI) or specific polymeric binders which give improved light resistance as described in e.g. **WO 2003054029** (CIBA), **EP 1308309** A (EASTMAN KODAK), WO 2001096124 other light stabilizers as described in **EP 1239013** A (HEWLETT PACKARD), **EP 1260379 A** (FUJI), **EP 1193079** A (HEWLETT PACKARD), **JP 2000094829** (KONICA), **EP 1170145** A (EASTMAN KODAK), **EP 1120279** A (HEWLETT PACKARD) **US 2003134093, US 2003096993** and **JP 2003300378**

Components which reduce the gas fading or ozone fading may also be incorporated in the ink-jet recording material according to the present invention. Suitable stabilizers are described in many patents on light stabilizing agents as given above and the following patents: **WO 2003054029, JP 2003103909** (MITSUBISHI PAPER MILLS), **JP 2002316480** (FUJI), **JP 2002127591** (FUJI), **JP 2003326842, JP 2003300378, EP 1331252** A (HEWLETT PACKARD) and **EP 1288007** A (TOMOEGAWA PAPER).

### Surfactants

Surfactants may be incorporated in the ink-jet recording material according to the present invention. They can be any of the cationic, anionic, amphoteric, and non-ionic ones as described in **JP 62280068** A (CANON)

Suitable surfactants for use in the ink-jet recording material according to the present invention include N-alkylamino acid salts, alkylether carboxylic acid salts, acylated peptides, alkylsulfonic acid salts, alkylbenzene and alkylnaphthalene sulfonic acid salts, sulfosuccinic acid salts, a-olefin sulfonic acid salts, N-acylsulfo-nic acid salts, sulfonated oils, alkylsulfonic acid salts, alkylether sulfonic acid salts, alkylallylethersulfonic acid salts, alkylamidesulfonic acid salts, alkylphosphoric acid salts, alkyletherphosphoric acid salts, alkylallyletherphosphoric acid salts, alkyl and alkylallylpolyoxyethylene ethers, alkylallylform-aldehyde condensed acid salts, alkylallylethersulfonic acid salts, alkylamide-sulfonic acid salts, alkylphosphoric acid salts, alkyletherphosphoric acid salts, alkylallyletherphosphoric acid salts, alkyl and alkylallylpolyoxyethylene ethers, alkylallyl-formaldehyde condensed polyoxyethylene ethers, blocked polymers having polyoxypropylene, polyoxyethylene polyoxypropylalkylethers, polyoxyethyleneether of glycolesters, polyoxyethylene-ether of sorbitanesters, polyoxyethyleneether of sorbitolesters, poly-ethyleneglycol aliphatic acid esters, glycerol esters, sorbitane esters, propyleneglycol esters, sugaresters, fluoro C₂-C₁₀ alkyl-carboxylic acids, disodium N-perfluorooctanesul-fonyl glutamate, sodium 3-(fluoro-C₆-C₁₁-alkyl-oxy)-1-C₃-C₄ alkyl sulfonates, sodium 3-(ω-fluoro-C₆-C₈alkanoyl-N-ethylamino)-1-propane sulfonates, N-[3-(perfluorooctanesulfonamide)-propyl]-N,N-dimethyl-N-carboxy-methylene ammonium betaine, fluoro-C₁₁-C₂₀ alkylcarboxylic acids, perfluoro-C₇-C₁₃-alkyl-carboxylic acids, perfluorooctane sulfonic acid diethanolamide, Li, K and Na perfluoro-C₄-C₁₂-alkyl sulfonates, N-propyl-N-(2-hydroxyethyl)per-fluorooctane sulfonamide, perfluoro-C₆-C₁₀-alkylsulfonamide-propyl-sulfonyl-glycinates, bis-(N-perfluorooctylsulfonyl-N-ethanolamino-ethyl)phosphonate, mono-perfluoro C₆-C₁₆ alkyl-ethyl phosphonates and perfluoroalkyl-betaine.

Suitable cationic surfactants for use in the ink-jet recording material according to the present invention include N-alkyl dimethyl ammonium chloride, palmityl trimethyl ammonium chloride, dodecyldimethyl-amine, tetradecyldimethylamine, ethoxylated alkyl guanidine-amine complex, oleamine hydroxypropyl bistrimonium chloride, oleyl imidazoline, stearyl imidazoline, cocamine acetate, palmitamine, dihydroxyethylcocamine, cocotrimonium chloride, alkyl polyglycolether ammonium sulphate, ethoxylated oleamine, lauryl pyridinium chloride, N-oleyl-1,3-diaminopropane, stearamidopropyl dimethylamine lactate, coconut fatty amide, oleyl hydroxyethyl imidazoline, isostearyl ethylimidonium ethosulphate, lauramidopropyl PEG-dimoniumchloride phosphate, palmityl trimethylammonium chloride, and cetyltrimethylammonium bromide.

Especially suitable surfactants for use in the ink-jet recording material according to the present invention are the fluorocarbon surfactants as described in e.g. **US 4781985** having a structure of:
F(CF₂)₄₋₉CH₂CH₂SCH₂CH₂N⁺ R₃X⁻ wherein R is a hydrogen or an alkyl group; and in **US 4781985** having a structure of:
CF₃(CF₂)ₘCH₂CH₂O(CH₂CH₂O)ₙR wherein m = 2 to 10; n = 1 to 18; R is hydrogen or an alkyl group of 1 to 10 carbon atoms. These surfactants are commercially available from DuPont and 3M. The concentration of the surfactant component in the ink-receiving layer is typically in the range of 0.1 to 2 %, preferably in the range of 0.4 to 1.5 % and is most preferably 0.75 % by weight based on the total dry weight of the layer.

### Plasticizers

The ink-jet recording material according to the present invention may also comprise a plasticizer such as ethylene glycol, diethylene glycol, propylene glycol, polyethylene glycol, glycerol monomethylether, glycerol monochlorohydrin, ethylene carbonate, propylene carbonate, urea phosphate, triphenylphosphate, glycerol-monostearate, propylene glycol monostearate, tetramethylene sulfone, n-methyl-2-pyrrolidone, n-vinyl-2-pyrrolidone.

### Crosslinking agents

The ink-jet recording material according to the present invention may also contain a crosslinking agent. Crosslinking agents - also known as hardening agents or hardeners - will crosslink film forming binders. Hardening agents can be used in free or in blocked form. The crosslinking agent may be used alone or in combination with two or more other crosslinking agents. A combination of organic and inorganic crosslinking agents may be used.

Suitable crosslinking agents for use in the ink-jet recording material according to the present invention include formaldehyde and free dialdehydes, such as succinaldehyde and glutaraldehyde, blocked dialdehydes, active esters, sulfonate esters, active halogen compounds, isocyanate or blocked isocyanates, polyfunctional isocyanates, melamine derivatives, s-triazines and diazines, epoxides, active olefins having two or more active bonds, carbodiimides, zirconium complexes, e.g. BACOTE® 20, ZIRMEL® 1000 or zirconium acetate®, available from MEL CHEMICALS, titanium complexes, such as TYZOR® grades from DU PONT isoxazolium salts subsituted in the 3-position, esters of 2-alkoxy-N-carboxy-dihydroquinoline, N-carbamoylpyridinium salts, hardeners of mixed function, such as halogen-substituted aldehyde acids (e.g. mucochloric and mucobromic acids), onium substituted acroleins and vinyl sulfones and polymeric hardeners, such as dialdehyde starches and copoly(acroleinmeth-acrylic acid), and oxazoline functional polymers, e.g. EPOCROS® WS-500, and EPOCROS® K-1000 series available from NIPPON SHOKUBAI CO, and maleic anhydride copolymers, e.g. GANTREZ® AN119 available from INTERNATIONAL SPECIALTY PRODUCTS.

In the practice of this invention boric acid is a preferred crosslinker.

The solvent, which constitutes the main portion of the crosslinking agent solution, is generally water, and may be an aqueous mixed solvent containing an organic solvent miscible with water.

As the organic solvent, any solvent wherein the crosslinking agent can be dissolved may be used. Examples thereof include alcohols such as methanol, ethanol, isopropyl alcohol, and glycerin; ketones such as acetone and methyl ethyl ketone; esters such as methyl acetate and ethyl acetate; aromatic solvents such as toluene; ethers such as tetrahydrofuran; and halogenated hydrocarbon solvents such as dichloromethane.

The supply of the crosslinking agent is preferably performed at the same time of applying the coating solution for forming the ink-receiving layer of the ink-jet recording material according to the present invention. The crosslinking agent may be already present in the coating solution, or may be added just before coating. The crosslinking agent may also be supplied by using a second coating solution coated on top of the ink-receiving layer, but preferably the second coating solution is coated before coating the ink-receiving layer. By this operation, cracks generated during drying of the ink-receiving layer can be reduced.

### EXAMPLES

The present invention will now be described in detail by way of Examples hereinafter. However the invention is not limited to these examples.

### Materials

All materials used in the following examples were readily available from standard commercial sources such as Aldrich Chemical Co. (Belgium) unless otherwise specified. The following terms and materials were used.

CELVOL 540® is a polyvinylalcohol available from CELANESE CHEMICALS.

PET is poly(ethylene terephtalate).

HDK T30® is a fumed silica from WACKER.

PET is poly(ethylene terephtalate).

WAKO V50® is 2,2'- Azobis(2-amidinopropane)dihydrochloride, available from WAKO CHEMICALS

MADQUAT MC75 is (methacryloxy)ethyltrimethylammonium chloride (compound CA-2) available from ELF ATOCHEM.

HEMA is hydroxyethyl methyl methacrylate (compound IM-2) available from ALDRICH.

HEA is hydroxyethyl methyl acrylate (compound IM-1) available from ALDRICH.

MMA is methyl methacrylate (compound IM-4) available from ALDRICH.

MA is methyl acrylate (compound IM-3) available from ALDRICH.

BISOMER MPEG 350 MA is methoxypolyethyleneglycol methacrylate (compound IM-5) available from LAPORTE INDUSTRIES.

MOPTMS is methacryloxypropyltrimethoxy silane (compound RM-12) is available as GENIOSIL GF-31®from WACKER SILICONES.

Gohsefimer K210® is a polyvinylalcohol available from Nippon Gohsei.

The word "part(s)" and the symbol "%" represent "part(s) by weight" and "% by weight".

### EXAMPLE 1

### Preparation of a cationized fumed silica

In this example the method for preparing a cationized silica is illustrated. The copolymerization of MOPTMS and MADQUAT is performed in the presence of the fumed silica WACKER HDK T30®.

First, an aqueous dispersion of WACKER HDK T30® was prepared by adding 180 grams of the fumed silica powder to 2000 grams of distilled water. A high shear mixer (PENDRAULIK® Type LM34S available from PENDRAULIK GMBH) was then used to homogenize the dispersion.The pH of the silica dispersion was adjusted to a pH=2 using a 10% aqueous solution of hydrochloric acid.

The silica dispersion (504.72 grams, 9% solids) was added to a 2 liter reactor and stirred at 250 RPM. The monomers MOPTMS (3,81 gram of a 6% solution in ethanol 98% pure) and MADQUAT (7,57 grams of a 30% aqueous solution) were added to the reactor at room temperature in 30 minutes. The silica dispersion was treated with a high-pressure homogenizer (MICROFLUIDIZER M-110F® available from MFIC Corp.) for 10 minutes in order to prepare a homogenized fine silica dispersion. This mechanical treatment also breaks big aggregates.

For the polymerisation reaction, a double jacketed 2 liter reactor was used, equiped with a cooler and nitrogen inlet and a mechanical stirrer. The silica dispersion was added to the reactor and flushed with nitrogen during 15 minutes while being strirred at 250 RPM. Subsequently, the reactor was heated to 70°C and the initiator (5,32 grams of an 0,47% aqueous solution of WAKO V50®was added over 90 minutes. After the addtion of the initiator was completed, the reaction mixture was stirred for an additional 2 hours at 70°C. The reactor was then cooled to room temperature. The resulting dispersion was then ready for use in the preparation of a coating solution. An average particle size of 267nm was measured with a BROOKHAVEN 90 Plus®. This is an automatic particle sizer using photon correlation spectroscopy of quasi-elastically scattered light is based upon correlating the fluctuations of the average, scattered, laser light intensity with a particle size.

### EXAMPLE 2

In this example the preparation of an ink-jet recording material according to the present invention is illustrated.

### Preparation of a coating composition

Different cationized fumed silicas were prepared from a fumed silica HDK T30® in the same manner as explained in Example 1. The type and the concentration of the monomer(s) used are shown in Table 1.

For example, a 9% dispersion of a cationized fumed silica is prepared for coating the invention example INV-1, by polymerizing in the presence of the fumed silica a mixture of the monomers MADQUAT and HEMA in a 5/1 weight ratio of MADQUAT/HEMA. The weight ratio of silica HDK T30® /(MADQUAT+HEMA) is 100/5.

**Table 1**

| **Coating examples** | **Concentration fumed silica dispersion** | **Concentration of monomers** | **Type of monomers** | **Weight ratio** |
|---|---|---|---|---|
| COMP-1 | 9% | 1 % | MADQUAT (CA-2) | - |
| COMP-2 | 9% | 5% | MADQUAT (CA-2) | - |
| COMP-3 | 9% | 10% | MADQUAT (CA-2) | - |
| INV-1 | 9% | 5% | MADQUAT (CA-2)/ HEMA | 5/1 |
| INV-2 | 9% | 5% | MADQUAT (CA-2)/ HEA | 5/1 |
| INV-3 | 9% | 5% | MADQUAT (CA-2)/ MMA | 5/1 |
| INV-4 | 9% | 5% | MADQUAT (CA-2)/ MA | 5/1 |
| INV-5 | 9% | 5% | MADQUAT (CA-2)/ MOPTMS (RM-12) | 5/1 |
| INV-6 | 9% | 5% | MADQUAT (CA-2)/ HEMA/ MPEG 350 | 5/1/1 |

The coating composition was prepared using the following ingredients:
1. a cationized fumed silica dispersion of Table 1 (9% in water)
2. an aqueous solution of Gohsefimer K210 (8.5% in water)
3. boric acid solution(4% in water)

6.62 grams of the Gohsefimer K210 solution was stirred for 10 minutes using a magnetic stirrer. Then 25 grams of the silica dispersion was added to the solution of polyvinyl alcohol in 10 minutes. Just before coating 4.22 grams of the boric acid solution was added to complete the coating solution.

### Coating of the samples

The coating solution was applied to a transparent 150 µm subbed PET as the support by means of a barcoater, providing a wet layer thickness of 299 micron and a dry coating weight of 20 g/m². The coated sample was slowly dried using a hair drier.

### Tests and evaluation

In each of the invention examples INV-1 to INV-6, the resultant ink-jet recording material was subjected to the following tests and evaluations of coating quality, drying time, coalescence, feathering and bleeding.

### 1. Coating quality

It was observed whether or not a crack was generated in the surface of the ink-jet recording material. Evaluation was then made in accordance with a criterion described below. The result is shown in table 2.

Criterion:
1 = Cracks were not observed in the surface at all.
2 = Minor cracks (visible with a microscope) were observed.
3 = Large cracks (visible with the naked eye) were observed

### 2. Drying time

An ink-jet printer EPSON STYLUS PHOTO 870® (available from Seiko-Epson) was used to print a test pattern of solid images in yellow (Y), magenta (M), cyan (C), black (K), blue (B), green (G) and red (R) on the ink-jet recording material. Immediately after this (i.e. after 10 seconds), the colours were rubbed with fingers and the smearing out of the colours was evaluated visually in accordance with a criterion described below. The result is shown in table 2

Criterion:
1 = no smearing out.
2 = smearing out of the secondary colours.
3 = smearing out of primary colours.

### 3. Coalescence

The receiving layer must be readily wetted so that there is no "puddling", i.e. coalescence of adjacent ink-droplets to form large drops on the surface of the ink-jet recording material. An ink-jet printer EPSON STYLUS PHOTO 870® (available from Seiko-Epson) was used to print a test pattern of ''full density" images in yellow (Y), magenta (M), cyan (C), black (K), blue (B), green (G) and red (R) on the ink-jet recording material. The secondary colours (B, G and R) were obtained by mixing two or more primary colours (Y,M and C). An evaluation was then made in accordance with a criterion described below. The result is shown in table 2.

Criterion:
1 = no coalescence
2 = coalescence in the secondary colours
3 = coalescence in primary colours
4 = full coalescence

### 4. Feathering

The feathering for example appears when cracks are present. Before a droplet of jetted ink dries, part of the ink travels into the cracks and reaches other colours, causing a coloured 'feather-like' structure in a differently coloured area of the image.

Criterion:
1 = no feathering
2 = feathering in the secondary colours
3 = feathering in primary colours

### 5. Bleeding

An ink-jet printer EPSON STYLUS PHOTO 870® (available from Seiko-Epson) was used to print a test pattern of images in yellow (Y), magenta (M), cyan (C), black (K), blue (B), green (G) and red (R) side by side on the ink-jet recording material. The inter-colour bleeding of dyes occurs when two colours overlap to create an unwanted colour line. An evaluation was then made in accordance with a criterion described below. The result is shown in table 2.

Criterion:
1 = no bleeding
2 = bleeding visible by microscope
3 = bleeding to be seen by the naked eye

### Results

**Table 2**

| **Coating examples** | **Coating quality** | **Drying time** | **Coalescence** | **Feathering** | **Bleeding** |
|---|---|---|---|---|---|
| COM P-1 | Flocculation | - | - | - | - |
| COM P-2 | Flocculation | - | - | - | - |
| COM P-3 | Flocculation | - | - | - | - |
| COM P-4 | Flocculation | - | - | - | - |
| COM P-5 | Flocculation | - | - | - | - |
| COM P-6 | Flocculation | - | - | - | - |
| INV-1 | 1 | 2 | 1 | 1 | 1 |
| INV-2 | 1 | 2 | 1 | 3 | 3 |
| INV-3 | 1 | 2 | 3 | 1 | 1 |
| INV-4 | 2 | 2 | 1 | 1 | 2 |
| INV-5 | 2 | 1 | 1 | 1 | 1 |
| INV-6 | 2 | 1 | 1 | 1 | 1 |

Based on the results of Table 2, it can be seen that it was not possible to coat an ink-jet receiving layer using a dispersion of a fumed silica cationized by a cationic homopolymer. Flocculation of the dispersion of the cationized fumed silica occurred at all concentrations of MADQUAT (CA-2) used in the preparation of the cationized fumed silica. Table 2 shows that use of co-monomer(s) improves not only the physical characteristics but also the image quality. For example, the feathering and bleeding of INV-2 can be improved by replacing HEA with more hydrophobic co-monomers such as HEMA in INV-1 or MMA in INV-3. It should be clear from Table 2 that with a proper selection of the co-monomer(s) it is possible to reach the best compromise in physical characteristics and image quality.

Having described in detail preferred embodiments of the current invention, it will now be apparent to those skilled in the art that numerous modifications can be made therein without departing from the scope of the invention as defined in the following claims.

## Claims

1. A process for preparing cationized fumed silica comprising the step of:
(i) copolymerizing a monomer mixture containing a cationic monomer and at least one non-cationic monomer in the presence of a fumed silica in a liquid medium to produce a dispersion of the in-situ cationized fumed silica.

2. Process according to claim 1, wherein said cationic monomer is an aminofunctional monomer that becomes cationic at a pH < 7.

3. Process according to claim 1 or 2, wherein said cationic monomer is selected from the group consisting of ammonium monomers, phosphonium monomers, sulfonium monomers, amphoteric monomers and amino containing monomers.

4. Process according to any one of claims 1 to 3, wherein said non-cationic monomer or cationic monomer is a monomer capable of forming a covalent bond with the surface of said fumed silica.

5. Process according to claim 4, wherein said non-cationic monomer capable of forming a covalent bond with said fumed silica is an alkoxy silane monomer.

6. Process according to any one of claims 1 to 3, wherein said non-cationic monomer or cationic monomer is a monomer capable of forming a hydrogen bond with the surface of said fumed silica.

7. Process according to any one of claims 1 to 6, wherein said fumed silica has a specific surface area of at least 100 m²/g.

8. Process according to any one of claims 1 to 7, wherein said fumed silica is doped with aluminum or zirconium.

9. A cationized fumed silica obtainable by a process according to any one of claims 1 to 8.

10. An ink-jet recording material comprising a support and at least one ink-receiving layer, said ink-receiving layer containing at least one binder and a cationized fumed silica obtainable by the process according to claim 1.

11. Ink-jet recording material according to claim 10, wherein said binder is a polyvinyl alcohol.

12. Ink-jet recording material according to claim 10 or 11, wherein said ink-jet recording material further comprises a layer between said at least one ink-receiving layer and said support.

13. A process for preparing an ink-jet recording material comprising the step of: (i) coating a dispersion containing a cationized fumed silica dispersion obtainable by the process according to claim 1 onto a support.
